# EUROPEAN PATENT APPLICATION

(11) **EP 2 075 269 A1**
(43) Date of publication of application: **01.07.2009**
(21) Application number: 08021920.7
(22) Date of filing: 17.12.2008
(51) Int. Cl.: C08F 220/30, C09D 11/02

(54) **Self-dispersible polymer, water-based dispersion, water-based ink composition, ink set and image forming method**

(30) Priority: 25.12.2007 JP 2007333062; 09.10.2008 JP 2008262929
(71) Applicant: FUJIFILM Corporation, Minato-ku Tokyo (JP)
(72) Inventor: Kato, Takahiro, Ashigarakami-gun Kanagawa (JP); Tamura, Akio, Ashigarakami-gun Kanagawa (JP); Ishizuka, Takahiro, Ashigarakami-gun Kanagawa (JP); Yanagi, Terukazu, Ashigarakami-gun Kanagawa (JP)
(74) Representative: HOFFMANN EITLE

(57) **Abstract**

The invention provides a self-dispersible polymer having one or more hydrophilic structural units and one or more aromatic group-containing structural units. The content of the aromatic group-containing structural units is in a range from 10 mass% to 95 mass% with respect to the total mass of the self-dispersible polymer, and the content of one or more water soluble components, which are contained in the self-dispersible polymer and exhibit solubility in water when the self-dispersible polymer is dispersed in a water-based medium, is 10 mass% or less with respect to the total mass of the self-dispersible polymer. The invention further provides a water-based dispersion containing the self-dispersible polymer, a water-based ink composition containing a polymer particle containing the self-dispersible polymer, an ink for ink jet recording containing the water-based ink composition, an ink set containing the water-based ink composition, and an image forming method including applying the water-based ink composition.

## Description

### BACKGROUND OF THE INVENTION

### Technical Field

The present invention relates to a self-dispersible polymer, a water-based ink composition containing the self-dispersible polymer, an ink set and an image forming method.

### Description of Related Art

An inkjet-recording method performs recording by respectively ejecting ink droplets from a large number of nozzles formed on an inkjet head, and is widely used for the reasons that noise at the time of a recording operation is low, running costs are inexpensive and a high definition image can be recorded on a large variety of recording media.

A carbon black pigment is generally used for a black ink used for inkjet printing. Further, the use of water soluble dyes for forming color inks is widespread. Improvements in resistance to climactic conditions in terms of properties such as lightfastness, ozone resistance, or water resistance have been required for inkjet inks. Improvement in the weather resistance of inkjet inks is particularly important when the application thereof to the printing field is considered.
Pigments are innately highly robust due to the high crystallinity thereof, and thus have remarkably excellent lightfastness and water resistance as compared with dyes. However, inks using a pigment may cause phenomena such as deterioration in dischargeability due to clogging of a nozzle part or the like, deterioration in storage stability due to coagulation and precipitation or the like, or deterioration in fixation property of a printed substance, such as in terms of friction resistance or glossiness, due to particles remaining on a surface of a recording medium.

An aqueous inkjet recording liquid in which a self water-dispersible copolymer resin obtained by copolymerizing an unsaturated monomer having an aliphatic hydrocarbon group having 14 to 20 carbon atoms, a benzyl methacrylate monomer, and a styrene monomer, and which is used in the aqueous inkjet recording liquid in a form of a hydrosol or an emulsion, has been disclosed as a technique for improving the fixation property of an ink (see, for example, Japanese Patent Application Laid-Open (JP-A) No. 2002-88285). JP-A No. 2002-88285 describes that the recording liquid has excellent storage stability, maintains high printing density and printing quality even though a rapid drying property is imparted thereto by penetration drying, and further has excellent abrasion resistance and water resistance.

Moreover, an inkjet recording aqueous ink which contains a self-dispersing pigment and a self-emulsified polymer particle containing a structural unit derived from an aromatic group-containing monomer has been disclosed (see, for example, Japanese Patent Application Laid-Open (JP-A) No. 2006-283003). JP-A No. 2006-283003 describes that the ink provides a printed image which exhibits excellent glossiness on customized paper while satisfying a high printing density.
Furthermore, an inkjet ink composition which contains an aqueous carrier medium, a surfactant, a pigment, and a polymer, in which the polymer contains benzyl methacrylate and is not associated with the pigment particle, has been disclosed (see, for example, Japanese Patent Application Laid-Open (JP-A) No. 2007-519772). JP-A No. 2007-519772 describes that the ink has excellent printing quality, image stability, resistance against water and oily substances, scratch resistance, and storage stability.

### SUMMARY OF THE INVENTION

Position disclosed in JP-A No. 2002-88285, the acid value of the copolymer and the neutralization degree caused by the basic compound that are disclosed as preferable ranges or described in the Examples are high, and a content of the water-soluble component thereof is extremely large.
The ratio of a hydrophilic group contained in the copolymer resin described in the Examples with respect to the self-emulsified polymer particles disclosed in JP-A No. 2006-283003 is also high. Further, the amount of the water-soluble component in the ink of JP-A No. 2006-283003 is large. This is possibly because the degree of neutralization caused by a basic compound used therein is high.
While JP-A No. 2007-519772 does not specifically describe preferable ranges of the acid value with respect to the self-dispersible polymer particles disclosed therein, the respective copolymers described in the Examples thereof respectively have a high acid value, and thus the amount of the water-soluble component in the ink inevitably increases.
In summary, while inks containing the above-described polymer particles can improve image quality in terms of fixation property or the like to a certain extent, the ink viscosity may increase and the discharging stability may decrease as a result.

The present invention has been made in view of such circumstances. The present invention provides: a stable self-dispersible polymer with a small water-soluble component; a water-based dispersion having favorable dispersibility; an ink composition and ink set having stable dischargeability and favorable fixation property, which has not been available hitherto; and an image forming method using the ink composition or the ink set.

According to an aspect of the present invention, there is provided a self-dispersible polymer comprising one or more hydrophilic structural units and one or more aromatic group-containing structural units, the content of the aromatic group-containing structural units being in a range from 10 mass% to 95 mass% with respect to the total mass of the
self-dispersible polymer, and the content of one or more water soluble components, which are contained in the self-dispersible polymer and exhibit solubility in water when the
self-dispersible polymer is dispersed in a water-based medium, being 10 mass% or less with respect to the total mass of the self-dispersible polymer.

According to another aspect of the present invention, there is provided a water-based dispersion comprising the self-dispersible polymer, the self-dispersible polymer being in a solid state and being dispersed in a water-based medium.

According to another aspect of the present invention, there is provided a water-based ink composition comprising: a water-based medium; a water-insoluble colored particle comprising a colorant; and a polymer particle comprising the self-dispersible polymer.

According to another aspect of the present invention, there is provided an ink for ink jet recording comprising the water-based ink composition.

According to another aspect of the present invention, there is provided an ink set comprising the water-based ink composition.

According to still another aspect of the present invention, there is provided an image forming method comprising applying the water-based ink composition to a recording medium, wherein the water-based ink composition may be a component of an ink set which further comprises another ink composition.

### DETAILED DESCRIPTION OF THE INVENTION

The self-dispersible polymer, the water-based dispersion, the water-based ink composition, the ink set, and the image recording method of the invention is herein explained in detail.

Self-dispersible polymer The self-dispersible polymer of the present invention contains a hydrophilic structural unit and an aromatic group-containing structural unit. The amount of the aromatic group-containing structural unit contained in the self-dispersible polymer with respect to an amount of the self-dispersible polymer is from 10 mass% to 95 mass%, and the amount of one or more water soluble components, which exhibit water solubility when the self-dispersible polymer is dispersed in a water-based medium and are contained in the self-dispersible polymer, with respect to the amount of the self-dispersible polymer is 10 mass% or less.
The self-dispersible polymer of the invention can be stably in a dispersion state when it is dispersed. Further, an increase in viscosity of the water-based ink composition containing the self-dispersible polymer of the invention which is in a dispersion state can be effectively suppressed. Therefore, the water-based ink composition containing the
self-dispersible polymer of the invention may have remarkable effects such as stable dischargeability and favorable fixation property, the extent of which could not have been conventionally recognized.

The content of the water soluble component(s), which exhibit water solubility when the self-dispersible polymer of the invention is dispersed, is 10 mass% or less, preferably 8 mass% or less, and more preferably 5 mass% or less, relative to the total mass of the polymer. When the content of water soluble component(s) exceeds 10 mass%, it may become difficult to maintain a stable dispersion state due to swelling or fusion of the polymer particles, and the viscosity of the water-based dispersion may increase, which may lead to an increase in the viscosity of the water-based ink composition of the invention in which the water-based dispersion is contained so that the discharging stability of the water-based ink composition is significantly deteriorated.

The "self-dispersible polymer" herein refers to a water-insoluble polymer which can be brought into a dispersion state in a water-based medium by a functional group (especially an acidic group or a salt thereof) of the polymer itself in the absence of a surfactant. The scope of the "dispersion state" herein includes both of an emulsion state in which the water-insoluble polymer which is in a liquid state is dispersed in a water-based medium and a suspension/dispersion state in which the water-insoluble polymer which is in a solid state is dispersed in a in the water-based medium.
From the viewpoint of achieving a favorable fixation property of the ink composition when the self-dispersible polymer is incorporated in the water-based ink composition, the self-dispersible polymer of the invention is preferably one which can be brought into a suspension/dispersion state.

Preferable examples of a method of emulsifying or suspending/dispersing the self-dispersible polymer, i.e., a method of preparing an water-based dispersion of the
self-dispersible polymer, include a phase inversion emulsification method. Examples of the phase inversion emulsification method include a method including dissolving or dispersing the self-dispersible polymer in a solvent (e.g., water soluble organic solvent); putting the self-dispersible polymer as it is in water without adding a surfactant; stirring and mixing the addition resultant in a state where the salt-generating group (e.g., an acidic group) contained in the self-dispersible polymer is neutralized; removing the solvent from the mixture resultant; and obtaining an water-based dispersion which has been emulsified or dispersed.

The self-dispersible polymer of the invention can be referred as being in the "stable emulsion state" or the "stable dispersion state" it can be stably in the emulsified or dispersion state at 25°C for at least one week without generating a visually observable precipitate when a emulsion or a suspension/dispersion of the self-dispersible polymer is formed by blending a solution in which 30 g of a water insoluble polymer has been dissolved in 70 g of an organic solvent (e.g., methyl ethyl ketone), a neutralizer (which is sodium hydroxide when the salt-generating group is anionic, or is acetic acid when the salt-generating group is cationic) with an amount to enable substantially completely neutralizing the salt-generating group of the water-insoluble polymer, and 200 g of water, mixing and stirring the resulted blend with a device (a stirrer with a stirring blade) under conditions that number of rotations is 200 rpm, mixing time is 30 minutes, and mixing temperature is 25°C, and removing the organic solvent from the resulted mixed liquid.

Alternatively, the stability of the emulsion state or the dispersion state in the self-dispersible polymer can be confirmed by a test with accelerating precipitation by centrifugal separation. Namely, the stability can be evaluated by the accelerated test of precipitation with centrifugal separation by, for example, preparing a sample having a solid content concentration of the water-based dispersion of polymer particles obtained by the above-described method being adjusted to 25 mass%, subjecting the sample to a centrifugal separation at 12,000 rpm for 1 hour, and measuring a solid content concentration of a supernatant of the centrifuged sample.
The larger a ratio of the concentration of the solid content of the supernatant of the centrifuged sample with respect to a solid content concentration of a supernatant of the sample measured before being subjected to the centrifugal separation is (i.e., when the ratio is a numerical value near 1), the more the precipitation of the polymer particles by centrifugal separation is prevented, i.e., the larger the degree of the stability of the water-based dispersion of the polymer particles is. The ratio of the solid content concentration of the supernatant of the centrifuged sample with respect to the solid content concentration of the supernatant of the sample measured before being subjected to the centrifugal separation is preferably 0.8 or more, more preferably 0.9 or more, and particularly preferably 0.95 or more.

A "dissolved amount" of the polymer herein means an amount which can be dissolved to 100 g of water at 25°C when the polymer has been substantially completely neutralized with sodium hydroxide or acetic acid according to the kind of the salt-generating group of the water-insoluble polymer. The "water-insoluble polymer" refers to a polymer which exhibits the dissolved amount of 10 g or less after being dried at 105°C for 2 hours. The dissolved amount is preferably 5 g or less, and more preferably 1 g or less.

The "water soluble component" refers to a compound which is contained in the self-dispersible polymer of the invention and which is dissolved in water when the
self-dispersible polymer is emulsified or dispersed in the water. The water soluble component is a water soluble compound which is by-produced or intermixed during production of the self-dispersible polymer or production of a water-based dispersion using the self-dispersible polymer.

A water-based medium contained in the water-based dispersion of the self-dispersible polymer contains water and may further contain a water soluble organic solvent as required.
It is preferable that the water-based medium consists of water and a water soluble organic solvent in which an amount of the water soluble organic solvent is 0.2 mass% or less relative to an amount of water, and it is more preferable that the water-based medium essentially consists of water.

There is no particular limitation to a skeleton of a main chain of the water insoluble polymer. Examples thereof include vinyl polymer and condensed polymers such as epoxy resin, polyester, polyurethane, polyamide, cellulose, polyether, polyurea, polyimide, or polycarbonate. Among the above, vinyl polymer is particularly preferable.

Preferable examples of the vinyl polymer and a monomer to form the vinyl polymer include those described in JP-A Nos. 2001-181549 or 2002-88294. Preferable examples thereof further include a vinyl polymer in which a dissociable group has been introduced into a terminal of a polymer chain thereof by radical polymerization of a vinyl monomer using a chain transfer agent having a dissociable group or a substituent which can be modified to be a dissociable group, a polymerization initiator, or iniferter, or by ionic polymerization using, as either an initiator or a stopper, a compound having a dissociable group or a substituent which can be modified to be a dissociable group.
Preferable examples of the condensed polymer and a monomer to form the condensed polymer include those described in JP-A No. 2001-247787.

The content of the aromatic group-containing structural unit (namely, a structural unit formed by incorporating an aromatic group-containing monomer into the self-dispersible polymer when the self-dispersible polymer is formed by polymerization) relative to the total mass of the self-dispersible polymer is in a range from 10 mass% to 95 mass%. When the content of the aromatic group-containing structural unit exceeds 95 mass%, the stability thereof in the emulsion state or the suspension/dispersion state may decrease. When the content of the aromatic group-containing structural unit is less than 10 mass%, the particle shape in the water-based medium may be instable or the content of the water soluble component in the self-dispersible polymer may increase.
From the viewpoints of improvement in the stability of a self-dispersion state, stabilization of the shape of particles of the self-dispersible polymer in the water-based medium resulted from hydrophobic interaction between aromatic rings, and reduction in the amount of the water-soluble component by appropriate hydrophobilization of the particles, the content of the aromatic group-containing structural unit relative to the total mass of the self-dispersible polymer is preferably in a range from 10 mass% to 80 mass%, and more preferably in a range from 10 mass% to 60 mass%.

There is no particular limitation to the aromatic group-containing monomer as long as it is a compound containing an aromatic group and a polymerizable group. The aromatic group may be provided from an aromatic hydrocarbon compound or may be provided from a compound having an aromatic heterocyclic ring. In the invention, the aromatic group is preferably an aromatic group provided from an aromatic hydrocarbon compound from the viewpoint of the stabilization of the shape of particles of the self-dispersible polymer in the water-based medium.
The polymerizable group may be a polymerizable group which is condensation polymerizable or may be a polymerizable group which is addition polymerizable. In the invention, from the viewpoint of improvement in stability of the shape of particles of the self-dispersible polymer in a water-based medium, the polymerizable group is preferably an addition-polymerizable polymerizable group, and more preferably a group containing an ethylenically unsaturated bond.

The aromatic group-containing monomer is preferably a monomer containing an aromatic group derived from aromatic hydrocarbon and an ethylenically unsaturated bond. The aromatic group-containing monomers may be used singly or in combination of two or more in the invention.
Examples of the aromatic group-containing monomer include: (meth)acrylate containing an aromatic group; and a styrene monomer. From the viewpoint of maintaining balance between the hydrophilicity and hydrophobicity of the polymer chain of the self-dispersible polymer, the aromatic group-containing monomer is preferably (meth)acrylate containing an aromatic group.

The scope of the "styrene monomer" include styrene, substituted styrene (such as α-methyl styrene or chlorostyrene), and styrene macromer having a polystyrene structural unit.
When the self-dispersible polymer of the invention contains a styrene monomer structural unit, which is derived from a styrene monomer, the ratio of an amount of the styrene monomer structural unit with respect to the total mass of the self-dispersible polymer is preferably 30 mass% or less, more preferably 20 mass% or less, and still more preferably 10 mass% or less from the viewpoint of higher dispersion stability. It is particularly preferable that the self-dispersible polymer has substantially no styrene monomer structural unit.

The (meth)acrylate containing an aromatic group is preferably a compound represented by the following Formula (I) from the viewpoint of obtaining higher dispersion stability. The "(meth)acrylate" herein refers to acrylate or methacrylate.

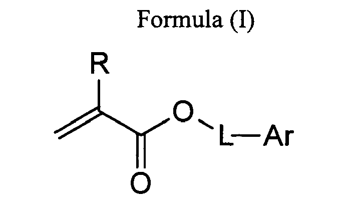

In Formula (I), R represents a hydrogen atom or a methyl group.
L represents a single bond or a divalent linking group containing at least one selected from the group consisting of an alkylene group having 1 to 20 carbon atoms, a (poly)ethylene oxy group having 1 to 20 repeating units, and (poly)propyleneoxy groups having 1 to 20 repeating units.
Ar represents a phenyl group or a monovalent group derived from a condensed cyclic aromatic ring compound or a compound in which two or more benzenes are bonded to each other.
Here, the "monovalent group derived from a condensed cyclic aromatic ring compound or a compound in which two or more benzenes are bonded to each other" refers to a monovalent group which is formed by removing at least one atom from a condensed cyclic aromatic ring compound or a compound in which two or more benzenes are bonded to each other. The position where at least one atom is removed is not particularly limited.

The "condensed cyclic aromatic ring compound" refers to: an aromatic ring in which at least two benzene rings have been condensed; and an aromatic compound containing at least one aromatic ring and cycloaliphatic hydrocarbon which has been condensed to the aromatic ring. In the invention, the number of carbons of the condensed cyclic aromatic ring compound is preferably in a range from 7 to 24, and more preferably in a range from 10 to 14.
Specific examples of the condensed cyclic aromatic ring compound include naphthalene, anthracene, fluorene, phenanthrene, and acenaphthene.

The "compound in which two or more benzenes are bonded" refers to a compound in which two or more (preferably 6 or fewer) benzene rings are bonded by a single bond, a divalent linking group, or a trivalent linking group. Here, the benzene rings may be bonded to each other by a plurality of linking groups, and any of the plurality of linking groups may be the same or different from each other.
It is preferable that the divalent linking group is selected from the group consisting of an alkylene group having 1 to 4 carbon atoms,, -CO-, -O-, -S-, -SO-, -SO₂-, and combination thereof. Examples of the trivalent linking group include a methine group.
From the viewpoint of sufficiently obtaining the effects of the invention, the number of the benzene rings in the compound in which two or more benzene rings have been bonded is preferably 6 or less, and more preferably 2 or 3.
Specific examples of the compound in which two or more benzene rings have been bonded include biphenyl, triphenylmethane, diphenylmethane, diphenyl ether, and diphenylsulfone.

Ar may further have a substituent. Examples of the substituent include an alkyl group, an alkoxyl group, an alkyl carbonyl group, an alkylcarbonyloxy group, an alkyloxy carbonyloxy group, a halogeno group, and a cyano group. Preferable examples thereof include an alkyl group having 1 to 10 carbon atoms, an alkoxyl group having 1 to 10 carbon atoms, an alkyl carbonyl group having 1 to 10 carbon atoms, an alkylcarbonyloxy group having 1 to 10 carbon atoms, a chloro group, and a cyano group.

The substituents may be substituted by one or more other substituents, and preferable examples of the other substituents are the same as those exemplified above for the substituents.
Ar may have two or more substituents. When Ar has two or more substituents, any of the two or more substituents may be the same or different from each other. If possible, the two or more substituents may be bonded to each other to form a ring.

From the viewpoints of stabilization of the shape of the particle of the
self-dispersible polymer in the water-based medium due to the hydrophobic interaction between aromatic rings and improvement in stability of particles in the water-based medium over time, Ar preferably represents a monovalent group which is formed by removing at least one atom from benzene, naphthalene, biphenyl, triphenylmethane, fluorene, anthracene, phenanthrene, or diphenylmethane, more preferably a monovalent group which is formed by removing at least one atom from benzene, naphthalene, or biphenyl, and particularly preferably a phenyl group, which is a monovalent group which is formed by removing at least one atom from benzene.
The following M-1 to M-17 are specific examples of the monomer represented by Formula (I), while the invention is not limited thereby.

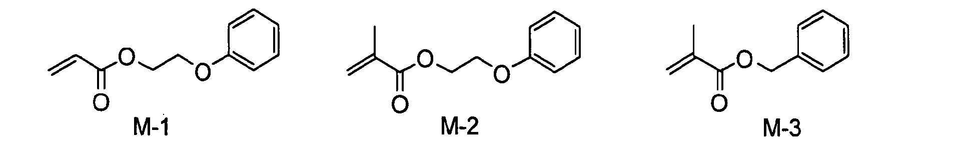

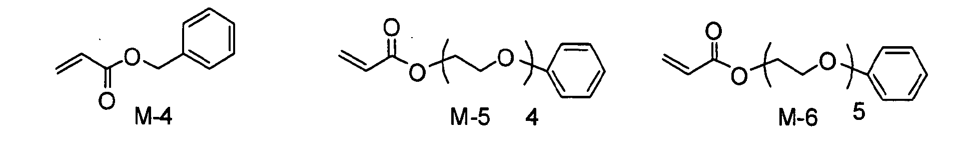

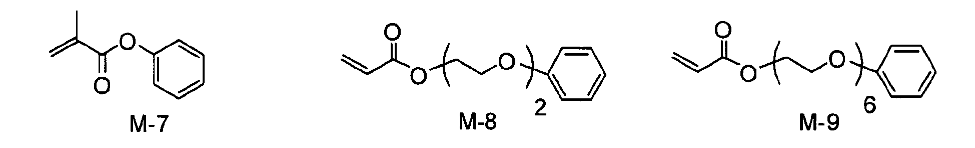

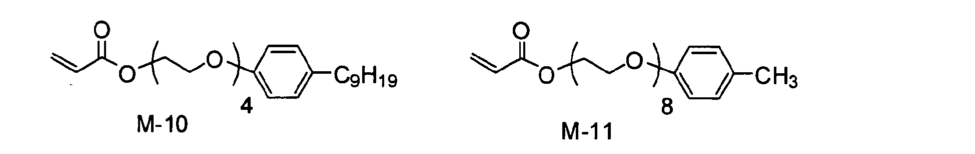

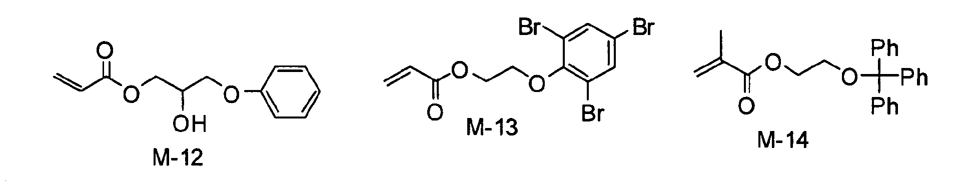

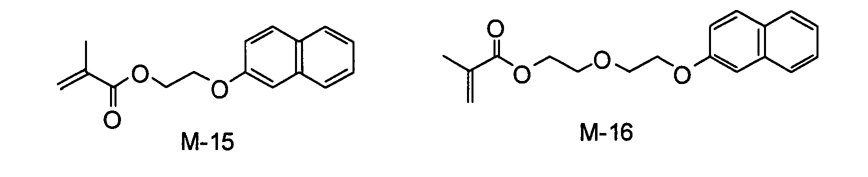

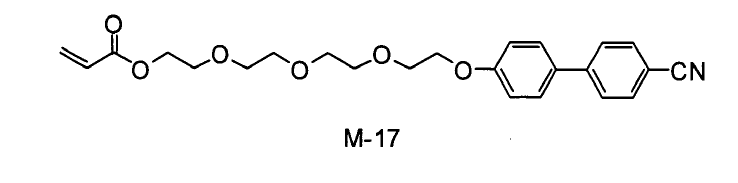

The self-dispersible polymer contains a hydrophilic structural unit. There is no limitation on the hydrophilic structural unit as long as it is obtained by incorporating a hydrophilic group-containing monomer into the self-dispersible polymer when the self-dispersible polymer is formed by polymerization. The hydrophilic structural unit may be either a unit obtained by modifying one hydrophilic group-containing monomer or a unit obtained by modifying two or more hydrophilic group-containing monomers. The hydrophilic group is not particularly limited, and may be a dissociable group or a nonionic hydrophilic group.
From the viewpoints of promoting self-dispersing property and improving the stability of the emulsion state or the suspension/dispersion state, it is preferable that at least one of the hydrophilic groups is a dissociable group, and it is more preferable that at least one of the hydrophilic groups is an anionic dissociable group. Examples of the dissociable group include a carboxy group, a phosphate group, and a sulfonic acid group. Among the above, from the viewpoint of improvement in fixation property at the time when an water-based ink composition is formed of the self-dispersible polymer, a carboxy group is particularly preferable as the dissociable group.

Preferable examples of embodiments of the self-dispersible polymer containing the hydrophilic structural unit include: one containing only a hydrophilic unit having an anionic dissociable group; and one containing both of a hydrophilic structural unit having an anionic dissociable group and a nonionic hydrophilic group.
The preferable examples include: one containing two or more hydrophilic units, each of which having an anionic dissociable group; and one containing a hydrophilic structural unit having an anionic dissociable group and two or more of nonionic hydrophilic structural units.

The content of the hydrophilic structural unit with respect to the total mass of the self-dispersible polymer of the invention is preferably 25 mass% or less, more preferably in a range from 1 to 25 mass%, still more preferably in a range from 2 to 23 mass%, and particularly preferably in a range from 4 to 20 mass%. When the content of the hydrophilic structural unit is within any one of the above ranges, an increase in the viscosity of a dispersant of the self-dispersible polymer can be suppressed and the discharging stability of an inkjet ink formed of the self-dispersible polymer may be effectively improved.
When the self-dispersible polymer contains two or more hydrophilic structural units, the total content of the hydrophilic structural units is preferably within any one of the above ranges.

The acid value (KOHmg/g) of the self-dispersible polymer of the invention is preferably from 20 to 200, more preferably from 22 to 120, still more preferably from 25 to 80, and particularly preferably from 25 to 65 from the viewpoint of self dispersibility, the content of water soluble component, and fixation property at the time when an water-based ink composition is formed. When the acid value is 20 or more, the particles can be more stably dispersed. When the acid value is 200 or less, the water soluble component can be reduced.

The content of the hydrophilic structural unit having an anionic dissociable group in the self-dispersible polymer of the invention is preferably adjusted such that the acid value can be within any one of the above ranges, and a particularly preferable content of the hydrophilic structural unit can be obtained by adjusting so that the acid value can be within the particularly preferable range thereof.
When the self-dispersible polymer of the invention contains a nonionic hydrophilic structural unit, the content of the nonionic hydrophilic structural unit with respect to the total mass of the self-dispersible polymer is preferably 25 mass% or less, more preferably 20 mass% or less, and particularly preferably 15 mass% or less. In one embodiment, the self-dispersible polymer can be preferably containing substantially no nonionic hydrophilic structural units.

In the invention, the "hydrophilic structural unit" refers to a hydrophilic
group-containing monomer structural unit. Examples of the hydrophilic group-containing monomer include a dissociable group-containing monomer and a nonionic hydrophilic group-containing monomer. Among these, a dissociable group-containing monomer having a dissociable group and an ethylenically unsaturated bond and a nonionic hydrophilic group-containing monomer having a nonionic hydrophilic group and an ethylenically unsaturated bond are preferable.

Examples of the dissociable group-containing monomer include an unsaturated carboxylic acid monomer, an unsaturated sulfonic acid monomer, and an unsaturated phosphoric acid monomer.
Specific examples of the unsaturated carboxylic acid monomer include acrylic acid, methacrylic acid, crotonic acid, itaconic acid, maleic acid, fumaric acid, citraconic acid, and 2-methacryloyloxy methylsuccinic acid. Specific examples of the unsaturated sulfonic acid monomer include styrene sulfonic acid, 2-acrylamido-2-methyl propane sulfonic acid, 3-sulfopropyl (meth)acrylate, and bis-(3-sulfopropyl)-itaconate. Specific examples of the unsaturated phosphoric acid monomer include vinyl phosphonic acid, vinyl phosphate, bis(methacryloxyethyl) phosphate, diphenyl-2-acryloyloxy ethyl phosphate,
diphenyl-2-metacryloyloxy ethyl phosphate, and dibutyl- 2-acryloyloxy ethyl phosphate.
Among the above dissociable group-containing monomers, the unsaturated carboxylic acid monomer is preferable, and acrylic acid and methacrylic acid are more preferable from the viewpoint of improvement in the dispersion stability and the discharging stability.

Examples of the nonionic hydrophilic group-containing monomer include: ethylenically unsaturated monomers containing a (poly)ethylene oxy group or a polypropyleneoxy group, such as 2-methoxy ethyl acrylate, 2-(2-methoxyethoxy) ethyl acrylate, 2-(2-methoxyethoxy) ethyl methacrylate, ethoxytriethylene glycol methacrylate, methoxypolyethylene glycol (molecular weight of from 200 to 1,000) monomethacrylate, or polyethylene glycol (molecular weight of from 200 to 1,000) monomethacrylate; and ethylenically unsaturated monomers containing a hydroxyl group, such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, or hydroxyhexyl (meth)acrylate.
In the invention, the nonionic hydrophilic group-containing monomer is more preferably an ethylenically unsaturated monomer having alkyl ether at a terminal of its hydrophilic group comparing to an ethylenically unsaturated monomer having a hydroxyl group at a terminal of its hydrophilic group from the viewpoints of the stability of the polymer particles and the content of water soluble component.

The self-dispersible polymer of the invention may contain, for example, a structural unit containing an aromatic group-containing monomer and a structural unit containing a hydrophilic group-containing monomer , and may further contain another structural unit as required.

While there is no particular limitation on the monomer forming the another structural unit as long as the monomer can be copolymerized with the aromatic group-containing monomer and the hydrophilic group-containing monomer, an alkyl group-containing monomer is preferable from the viewpoint of the flexibility of the polymer skeleton, ease of control of glass transition temperature (Tg) and the like.
Examples of the alkyl group-containing monomer include alkyl (meth)acrylates, such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, or ethylhexyl (meth)acrylate; dialkylamino alkyl (meth)acrylates, such as dimethylaminoethyl (meth)acrylate; N-hydroxyalkyl (meth)acrylamides, such as
N-hydroxymethyl (meth)acrylamide, N-hydroxyethyl (meth)acrylamide, or N-hydroxybutyl (meth)acrylamide; (meth)acrylamides, such as N-alkoxy alkyl (meth)acrylamide, such as N-methoxymethyl (meth)acrylamide, N-ethoxymethyl (meth)acrylamide, N-(n-, iso) butoxymethyl (meth)acrylamide, N-methoxyethyl (meth)acrylamide, N-ethoxyethyl (meth)acrylamide, or N-(n-, iso) butoxyethyl (meth)acrylamide.

The monomer which may form the another structural unit in the self-dispersinbe polymer of the invention (hereinafter sometimes simply referred to as "another monomer") is preferably (meth)acrylate having a straight- or branched- chain alkyl group having 1 to 8 carbon atoms, more preferably (meth)acrylate having a straight- or branched- chain alkyl group having 1 to 4 carbon atoms, and particularly preferably methyl (meth)acrylate or ethyl (meth)acrylate.
When the another monomer is (meth)acrylate having a straight- or branched-chain alkyl group having 1 to 8 carbon atoms, the stability of the self-dispersible polymer may be more effectively improved. In contrast, when (meth)acrylate having a straight- or branched-chain alkyl group having 9 or more carbon atoms, particularly (meth)acrylate having a straight- or branched- chain alkyl group having 12 or more carbon atoms, is used as the monomer forming the another structural unit, the stability of the self-emulsified polymer particle may tend to decrease. Therefore, in one preferable embodiment of the invention, the self-dispersible polymer is substantially free of a (meth)acrylate structural unit having an alkyl group having 9 or more carbon atoms.

In the invention, the monomer forming the another structural unit may be used singly or in combination of two or more.
When the self-dispersible polymer of the invention contains a another monomer structural unit (namely, a structural unit formed by incorporating another monomer into the self-dispersible polymer when the self-dispersible polymer is formed by polymerization), the content of the another monomer structural unit is preferably from 10 to 80 mass%, more preferably from 15 to 75 mass%, and particularly preferably from 20 to 70 mass% with respect to the total mass of the self-dispersible polymer.

From the viewpoint of favorable stability, the self-dispersible polymer of the invention is preferably a polymer obtained by polymerizing at least the aromatic
group-containing monomer, the hydrophilic group-containing monomer, and the another monomer, and more preferably a polymer obtained by polymerizing at least the aromatic group-containing monomer, the hydrophilic group-containing monomer, and a monomer having a straight- or branched- chain alkyl group having 1 to 8 carbon atoms.

The range of the molecular weight of the self-dispersible polymer in the invention is preferably from 3,000 to 200,000, more preferably from 5,000 to 150,000, and still more preferably from 10,000 to 100,000 in terms of weight average molecular weight. When the weight average molecular weight is adjusted to 3,000 or more, the amount of water soluble component can be effectively controlled. Moreover, when the weight average molecular weight is adjusted to 200,000 or less, the self-emulsified stability can be increased.
The weight average molecular weight can be measured by gel permeation chromatography (GPC).

The glass transition temperature (Tg) of the self-dispersible polymer of the invention is preferably 40°C to 150°C, more preferably 60°C to 140°C, and particularly preferably 70°C to 130°C. When the glass transition temperature is 40°C or more, the scratch resistance and blocking resistance of an image formed using an water-based ink composition containing the self-dispersible polymer can be increased. Moreover, when the glass transition temperature is 150°C or less, the friction resistance of the image can become more improved.

From the viewpoint of control of hydrophilicity or hydrophobicity, the self-dispersible polymer of the invention is preferably a vinyl polymer which contains: the aromatic group-containing structural unit, the content of which with respect to the total mass of the self-dispersible polymer is from 10 to 80 mass%; the dissociable group-containing structural unit; and a structural unit formed by incorporating a monomer containing a straight-or branched- chain alkyl group having 1 to 8 carbon atom into the self-dispersible polymer when the self-dispersible polymer is formed by polymerization, has an acid value of from 20 to 120, has 1 mass% to 25 mass% of a hydrophilic structural unit(s) with respect to the total mass of the self-dispersible polymer, and has a weight average molecular weight of from 3,000 to 200,000.
More preferably, the self-dispersible polymer of the invention is a vinyl polymer which contains an aromatic group-containing (meth)acrylate structural unit and a structural unit formed by incorporating a (meth)acrylate monomer containing an alkyl group having 1 to 4 carbon atoms into the self-dispersible polymer when the self-dispersible polymer is formed by polymerization, the content of the aromatic group-containing (meth)acrylate structural unit and the (meth)acrylate structural unit with respect to the total mass of the self-dispersible polymer is from 10 to 80 mass%, has a dissociable group-containing structural unit with a content satisfying the acid value of the self-dispersible polymer being from 25 to 80, has 2 mass% to 23 mass% of a hydrophilic structural unit(s) with respect to the total mass of the self-dispersible polymer, has a weight average molecular weight of from 5,000 to 150,000; and is obtained by polymerization in an organic medium.
Further preferably, the self-dispersible polymer of the invention is a vinyl polymer which contains an aromatic group-containing (meth)acrylate structural unit with a content of from 10 to 60 mass% with respect to the total mass of the self-dispersible polymer, a methyl (meth)acrylate structural unit or an ethyl (meth)acrylate structural unit with a content of from 20 to 75 mass% with respect to the total mass of the self-dispersible polymer, and an acrylic acid structural unit or a methacrylic acid structural unit with a content satisfying the acid value being from 25 to 65, has a total content of a hydrophilic structural unit(s) of 4 mass% to 20 mass%, has a weight average molecular weight of from 5,000 to 150,000, and is obtained by polymerization in an organic medium.

Specific examples of the self-dispersible polymer (Compounds B-01 to B-22) are shown below, while the invention is not limited thereto. The ratio in the parentheses indicates the mass ratio of copolymerization components.

B-01: Phenoxy ethyl acrylate/Methyl methacrylate/Acrylic acid copolymer (50/45/5)
B-02: Phenoxy ethyl acrylate/Benzyl methacrylate/Isobutyl methacrylate/Methacrylic acid copolymer (30/35/29/6)
B-03: Phenoxy ethyl methacrylate/Isobutyl methacrylate/Methacrylic acid copolymer (50/44/6)
B-04: Phenoxy ethyl acrylate/Methyl methacrylate/Ethyl acrylate/Acrylic acid copolymer (30/55/10/5)
B-05: Benzyl methacrylate/Isobutyl methacrylate/Methacrylic cid copolymer (35/59/6)
B-06: Styrene/Phenoxy ethyl acrylate/Methyl methacrylate/Acrylic acid copolymer (10/50/35/5)
B-07: Benzyl acrylate/Methyl methacrylate/Acrylic acid copolymer (55/40/5)
B-08: Phenoxy ethyl methacrylate/Benzyl acrylate/Methacrylic acid copolymer (45/47/8)
B-09: Styrene/Phenoxy ethyl acrylate/Butyl methacrylate/Acrylic acid copolymer (5/48/40/7)
B-10: Benzyl methacrylate/Phenoxy ethyl methacrylate/Methyl methacrylate/Methacrylic acid copolymer (30/30/30/10)
B-11: Phenoxy ethyl acrylate/Methyl methacrylate/Butyl acrylate/Methacrylic acid copolymer (12/50/30/8)
B-12: Benzyl acrylate/Isobutyl methacrylate/Acrylic acid copolymer (93/2/5)
B-13: Styrene/Phenoxy ethyl methacrylate/Butyl acrylate/Acrylic acid copolymer (50/5/20/25)
B-14: Methyl methacrylate/Phenoxy ethyl methacrylate/Benzyl acrylate/Acrylic acid copolymer (50/30/15/5)
B-15: Styrene/Isobutyl methacrylate/Methacrylic acid copolymer (35/57/8)
B-16: Benzyl acrylate/Acrylic acid copolymer (90/10)
B-17: Methyl methacrylate/Methoxy ethyl acrylate/Benzyl methacrylate/Methacrylic acid copolymer (44/15/35/6)
B-18: Ethyl methacrylate/Benzyl methacrylate/Ethoxytriethylene glycol methacrylate/Methacrylic acid copolymer (46/40/10/4)
B-19: Methyl methacrylate/Benzyl methacrylate/Methoxy polyethylene glycol methacrylate (n= 23)/Methacrylic acid copolymer (74/15/5/6)
B-20: Benzyl methacrylate/Ethoxytriethylene glycol methacrylate/Methacrylic acid copolymer (65/30/5)
B-21: Benzyl acrylate/Methyl methacrylate/Acrylic acid copolymer (60/30/10)
B-22: StyreneButyl acrylate/Acrylic acid copolymer (62/35/3)

There is no particular limitation on a method of producing the self-dispersible polymer of the invention. The self-dispersible polymer of the invention can be produced by copolymerizing a monomer mixture by known polymerization methods. Among the known polymerization methods, a solution-polymerization method is particularly preferable from the viewpoint of the drop-ejection stability when the self-dispersible polymer of the invention is formed into an water-based ink composition.
One embodiment of the method of producing the self-dispersible polymer of the invention can include copolymerizing a monomer mixture, and a mixture containing an organic solvent and a radical polymerization initiator as required, in an inert gas atmosphere to produce a water-insoluble polymer.

It is preferable that the method of producing the self-dispersible polymer of the invention further include a process of obtaining the self-dispersible polymer as an water-based dispersion. It is preferable that the process of obtaining the self-dispersible polymer as an water-based dispersion contain the following processes (1) and (2).
The process (1) includes stirring a mixture containing a water-insoluble polymer, an organic solvent, a neutralizer, and a water-based medium.
The process (2) includes removing the organic solvent from the stirred mixture.

The process (1) is preferably a treatment to firstly dissolve the water-insoluble polymer in an organic solvent, secondly gradually add a neutralizer and a water-based medium to the resultant, and then mixing and stirring the resultant to obtain a dispersion. By thus adding a neutralizer and a water-based medium to the water-insoluble polymer solution which has been dissolved into an organic solvent, self-dispersible polymer particles having a particle diameter to achieve a higher storage stability can be obtained without requiring strong shearing force.
There is no particular limitation on a method to stir the mixture, and examples thereof include a method using a generally-used mixing-stirring device and a method using a disperser such as an ultrasonic disperser or a high pressure homogenizer, as required.

Preferable examples of the organic solvent include an alcohol solvent, a ketone solvent, and an ether solvent.
Examples of the alcohol solvent include isopropyl alcohol, n-butanol, t-butanol, and ethanol. Examples of the ketone solvent include acetone, methyl ethyl ketone, diethyl ketone, and methyl isobutyl ketone. Examples of the ether solvent include dibutyl ether and dioxane. Among the above solvents, a ketone solvent such as methyl ethyl ketone, and an alcohol solvent such as isopropyl alcohol are preferable. It is also preferable to use isopropyl alcohol and methyl ethyl ketone in combination for the purpose of moderating the polarity change at the time of the phase inversion from an oil phase to an aqueous phase. By using the solvents in combination, self-dispersible polymer particles with a fine particle diameter, high dispersion stability, and freeness from coagulation-precipitation and fusion of particles can be obtained.

The neutralizer can be used in order to form a stable emulsified or dispersion state in which a dissociable group is partially or completely neutralized to have the self-dispersible polymer be stable in water. Examples of the neutralizer to be used when the self-dispersible polymer of the invention has an anionic dissociable group include basic compounds, such as hydroxides of an organic amine compound, ammonia, or alkali metal. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethyl-ethanolamine, N,N-diethyl-ethanolamine, 2-dimethylamino-2-methyl-1-propanol,
2-amino-2-methyl-1-propanol, N-methyldiethanolamine, N-ethyldiethanolamine, monoisopropanolamine, diisopropanolamine, and tri-isopropanolamine. Examples of the hydroxides of alkali metal include lithium hydroxide, sodium hydroxide, and potassium hydroxide. Particularly, from the viewpoint of dispersion stability in water of the
self-dispersible polymer particles of the invention, sodium hydroxide, potassium hydroxide, triethylamine, and triethanolamine are preferable.

The amount of the basic compound used as the netralizer withe respect to 100 mol% of dissociable group is typically from 5 mol% to 120 mol%, preferably from 20 mol% to 100 mol%, and more preferably from 30 mol% to 80 mol%. When the amount thereof is adjusted to 20 mol% or more, an effect of stabilizing dispersion of particles in water can be exhibited. When the amount thereof is adjusted to 100 mol% or less, an amount of water soluble component(s) in the self-dispersible polymer can be reduced.

In the process (2), an water-based dispersion of the self-dispersible polymer particles can be obtained by converting the dispersion obtained in the process (1) to an aqueous phase by distilling off the organic solvent therefrom by a common procedure, such as vacuum distillation. The organic solvent in the obtained water-based dispersion is substantially removed, and the amount of the organic solvent is preferably 0.2 mass% or less, and more preferably 0.1 mass% or less with respect to the total mass of the water-based dispersion.

The water-based dispersion of the self-dispersible polymer of the invention is preferably a water-based dispersion in which a vinyl polymer is dispersed, in which 20 mol% to 100 mol% of a dissociable group-containing structural unit in the vinyl polymer is dispersed in a neutralized state, and the vinyl polymer contains: the aromatic group-containing structural unit, the content of which with respect to the total mass of the self-dispersible polymer is from 10 mass% to 80 mass%; the dissociable group-containing structural unit; and a structural unit formed by incorporating a monomer containing a straight-or branched- chain alkyl group having 1 to 8 carbon atom into the self-dispersible polymer when the self-dispersible polymer is formed by polymerization, has an acid value of from 20 to 120, has 1 mass% to 25 mass% of a hydrophilic structural unit(s) with respect to the total mass of the self-dispersible polymer, and has a weight average molecular weight of from 3,000 to 200,000.
More preferably, the water-based dispersion of the self-dispersible polymer of the invention is a water-based dispersion in which a vinyl polymer is dispersed, in which 30 mol% to 80 mol% of a dissociable group-containing structural unit in the vinyl polymer is dispersed in a neutralized state, and the vinyl polymer contains an aromatic group-containing (meth)acrylate structural unit and a structural unit formed by incorporating a (meth)acrylate monomer containing an alkyl group having 1 to 4 carbon atoms into the self-dispersible polymer when the self-dispersible polymer is formed by polymerization, the content of the aromatic group-containing (meth)acrylate structural unit and the (meth)acrylate structural unit with respect to the total mass of the self-dispersible polymer is from 10 to 80 mass%, has a dissociable group-containing structural unit with a content satisfying the acid value of the self-dispersible polymer being from 25 to 80, has 2 mass% to 23 mass% of a hydrophilic structural unit(s) with respect to the total mass of the self-dispersible polymer, has a weight average molecular weight of from 5,000 to 150,000; and is obtained by polymerization in an organic medium.
Further preferably, the water-based dispersion of the self-dispersible polymer of the invention is a water-based dispersion in which a vinyl polymer is dispersed, in which 30 mol% to 80 mol% of a dissociable group-containing structural unit in the vinyl polymer is dispersed in a neutralized state, and the vinyl polymer contains an aromatic group-containing (meth)acrylate structural unit with a content of from 10 to 60 mass% with respect to the total mass of the self-dispersible polymer, a methyl (meth)acrylate structural unit or an ethyl (meth)acrylate structural unit with a content of from 20 to 75 mass% with respect to the total mass of the self-dispersible polymer, and an acrylic acid structural unit or a methacrylic acid structural unit with a content satisfying the acid value being from 25 to 65, has a total content of a hydrophilic structural unit(s) of 4 mass% to 20 mass%, has a weight average molecular weight of from 5,000 to 150,000, and is obtained by polymerization in an organic medium.
When the water-based dispersion of the self-dispersible polymer of the invention has a configuration as described above, an amount of water soluble component(s) in the
water-based dispersion can be suppressed to be 10 mass% or less so that the dispersion stability thereof can be improved and the ejection stability of an ink composition containing the water-based dispersion is can be improved.

The average particle diameter of the self-dispersible polymer particles is preferably within the range of from 1 nm to 100 nm, more preferably from 3 nm to 80 nm, and still more preferably from 5 nm to 60 nm. Particularly preferably is from 5 nm to 40 nm. When the average particle diameter is 1 nm or more, the production suitability of the particles can be improved. When the average particle diameter is adjusted to 100 nm or less, the storage stability of the particles can be improved.
There is no particular limitation on the particle size distribution of the
self-dispersible polymer particles. The self-dispersible polymer particles may have a broad particle size distribution or a mono-dispersion particle size distribution. Two or more kinds of water insoluble particles having different particle size distributions may be used in combination.
The average particle diameter and the particle size distribution of the self-dispersible polymer particles can be measured using light scattering or the like.
A single or in a combination of two or more of the self-dispersible polymer of the invention can be preferably contained in an water-based ink composition.
When the self-dispersible polymer of the invention is contained in an water-based ink composition, it is preferable that the self-dispersible polymer particles exist in the form of substantially containing no colorants.

Water-based ink composition The water-based ink composition of the invention contains at least a water-insoluble colored particle (A) and the self-dispersible polymer (B) of the invention. The inclusion of the self-dispersible polymer of the invention can improve the storage stability and the ejection stability of the water-based ink composition as well as the fixing property of an image formed of the water-based ink composition.

The water-based ink composition of the invention can be used in not only monochromatic image formation, but full color image formation. To form a full color image, a magenta tone ink, a cyan tone ink and a yellow tone ink can be used, and to adjust the tone, a black tone ink may further be used. Furthermore, other than the yellow, magenta and cyan tone inks, red, green, blue and white color inks and so-called specific color inks in printing filed (for example, colorless) can be used.

A method for recording an image using the water-based ink composition of the invention is not particularly limited, and the conventional image recording methods can be used. The image recording method that can be used includes a method of applying a water-based ink composition to a medium to be recorded by the means such as an ink-jet method, a mimeograph method or a transfer printing method. Above all, an image recording method including a step of applying the water-based ink composition of the invention by an inkjet method is preferred from the standpoint of downsizing of a recording apparatus and high speed recording properties.

(A) Water-insoluble colored particles The water-insoluble colored particles (A) used in the invention contain at least one kind of colorant. As the colorant, any one of conventional dyes, pigments and the like may be used without particular limitation. Above all, a colorant that is substantially insoluble or sparingly soluble in water is preferred from the standpoint of ink coloring properties.
Specific examples of the colorant include various pigments, disperse dyes, oil-soluble dyes and dyestuffs forming J aggregate. Pigments are more preferred.
In the invention, the water-insoluble pigment itself or the pigment itself surface-treated with a dispersant can be used as the water-insoluble colored particles.

The pigment that may be used in the invention is not particularly limited in its kind, and any one of the conventional organic and inorganic pigments may be used. Examples of the pigment that may be used include polycyclic pigments such as azo lake, azo pigment, phthalocyanine pigment, perylene and perynone pigments, anthraquinone pigment, quinacridone pigment, dioxadine pigment, diketopyrrolopyrrole pigment, thioindigo pigment, isoindoline pigment and quinophthalone pigment; dye lakes such as basic dye type lake and acidic dye type lake; organic pigments such as nitro pigment, nitroso pigment, aniline black and daylight fluorescent pigment; and inorganic pigments such as titanium oxide, iron oxide type and carbon black type. Even pigments that are not described in Color Index can be used so long as it is a pigment capable of being dispersed in an aqueous phase. Furthermore, those obtained by surface treating the above-described pigments with a surfactant, a polymeric dispersant or the like, and grafted carbon can also be used. Of the above pigments, azo pigment, phthalocyanine pigment, anthraquinone pigment, quinacridone pigment and carbon black type pigment are preferably used.

Specific examples of the organic pigment used in the invention are described below.
Examples of the organic pigment for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 151, C.I. Pigment Yellow 155, C.I. Pigment Yellow 180 and C.I. Pigment Yellow 185.

Examples of the organic pigment for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222 and C.I. Pigment Violet 19.

Examples of the organic pigment for green or cyan include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and siloxane-crosslinked aluminum phthalocyanine described in US Patent 4,311,775.
Examples of the organic pigment for black include C.I. Pigment Black 1, C.I.
Pigment Black 6 and C.I. Pigment Black 7.

Dispersant When the colorant used in the invention is a pigment, the pigment is preferably dispersed in an aqueous solvent by a dispersant. The dispersant may be a polymer dispersant, or a low molecular surfactant type dispersant. The polymer dispersant may be either one of a water-soluble dispersant or a water-insoluble dispersant.
The low molecular surfactant type dispersant (hereinafter sometimes referred to as a "low molecular dispersant") can be added for the purpose of stably dispersing the organic pigment in a water solvent while maintaining an ink in low viscosity. The low molecular dispersant used herein means a low molecular dispersant having a molecular weigh of 2,000 or less. The molecular weight of the low molecular dispersant is preferably from 100 to 2,000, and more preferably from 200 to 2,000.

The low molecular dispersant has a structure containing a hydrophilic group and a hydrophobic group. At least one of each of the hydrophilic group and the hydrophobic group may be independently contained in one molecule, and the low molecular dispersant may have plural kinds of the hydrophilic group and the hydrophobic group. The low molecular dispersant can appropriately have a linking group for linking the hydrophilic group and the hydrophobic group.

Examples of the hydrophilic group include an anionic group, a cationic group, a nonionic group, and a betaine type combining those.
The anionic group is not particularly limited so long as it has a negative charge. A phosphoric acid group, a phosphonic acid group, a phosphinic acid group, a sulfuric acid group, a sulfonic acid group, a sulfinic acid group and a carboxyl group are preferred, a phosphoric acid group and carboxyl group are more preferred, and a carboxyl group is further preferred.

The cationic group is not particularly limited so long as it has a positive charge. An organic cationic substituent is preferred, a cationic group containing nitrogen or phosphorus is more preferred, and a cationic group having nitrogen is further preferred. Above all, pyridinium cation and ammonium cation are particularly preferred.
The nonionic group is not particularly limited so long as it does not have negative or positive charge. Examples of the nonionic group include polyalkylene oxide, polyglycerin and a part of sugar unit

It is preferred in the invention that the hydrophilic group is an anionic group from the standpoints of dispersion stability and aggregation properties of a pigment.
When the low molecular dispersant has an anionic hydrophilic group, its pKa is preferably 3 or more from the standpoint of contacting with an acidic treating liquid to accelerate an aggregation reaction. The pKa of the low molecular dispersant in the invention is a value experimentally obtained from a titration curve by titrating a liquid obtained dissolving 1 mmol/liter of a low molecular dispersant in a tetrahydrofuran-water=3:2 (V/V) solution, with an acid or alkali aqueous solution.
Theoretically, when pKa of a low molecular weight dispersant is 3 or more, 50% or more of anionic groups are in a non-dissociation state when contacted with a treating liquid having a pH of about 3. Therefore, water solubility of the low molecular weight dispersant is remarkably decreased, and an aggregation reaction occurs. In other words, aggregation reactivity is improved. From this standpoint, it is preferred that the low molecular dispersant has a carboxylic group as an anionic group.

On the other hand, the hydrophobic group may have any structure of hydrocarbon type, fluorocarbon type, silicone type and the like, and the hydrocarbon type is particularly preferred. Those hydrophobic groups may have any of a linear structure and a branched structure. The hydrophobic group may have one chain structure or two or more chain structure. Where the structure has two or more chains, the structure may have plural kinds of hydrophobic groups.

The hydrophobic group is preferably a hydrocarbon group having from 2 to 24 carbon atoms, more preferably a hydrocarbon group having from 4 to 24 carbon atoms, and further preferably a hydrocarbon group having from 6 to 20 carbon atoms.

Of the polymer dispersants which can be used in the invention, a hydrophilic polymer compound can be used as the water-soluble dispersant. Examples of a natural hydrophilic polymer compound include vegetable polymers such as gum Arabic, gum tragacanth, gum guar, gum karaya, locust bean gum, arabinogalactan, pectin and quince seed starch; seaweed polymers such as alginic acid, carrageenan and agar; animal polymers such as gelatin, casein, albumin and collagen; and microbial polymers such as xanthene gum and dextran.

Examples of a chemically modified hydrophilic polymer compound using a natural product as a raw material include cellulose polymers such as methyl cellulose, ethyl cellulose, hydroxyethyl cellulose, hydroxypropyl cellulose and carboxymethyl cellulose; starch polymers such as starch sodium glycolate and starch sodium phosphate ester; and seaweed polymers such as propylene glycol alginate ester.

Examples of a synthetic water-soluble polymer compound include vinyl polymers such as polyvinyl alcohol, polyvinyl pyrrolidone or polyvinyl methyl ether; acrylic resins such as polyacrylamide, polyacrylic acid or its alkali metal salt, or water-soluble styrene acrylic resin; water-soluble styrene maleic acid resins; water-soluble vinylnaphthalene acrylic resins; water-soluble vinylnaphthalene maleic resins; polyvinyl pyrrolidone, polyvinyl alcohol, alkali metal salts of β-naphthalenesulfonic acid formalin condensate; and polymer compounds having a salt of a cationic functional group such as quaternary ammonium or amino group at a side chain.

Of those, a polymer compound containing a carboxyl group is preferred from the standpoints of dispersion stability and aggregation properties of pigment. Polymer compounds containing a carboxyl group, such as acrylic resins such as water-soluble styrene acrylic resin; water-soluble styrene maleic resin; water-soluble vinylnaphthalene acrylic resin; and water-soluble vinylnaphthalene maleic acid resin are particularly preferred.

Of the polymer dispersants, as a non-water-soluble dispersant, a polymer having both a hydrophilic moiety and a hydrophobic moiety may be used. Examples of such a polymer include styrene-(meth)acrylic acid copolymer, styrene-(meth)acrylic acid-(meth)acrylic acid ester copolymer, (meth)acrylic acid ester-(meth)acrylic acid copolymer, polyethylene glycol (meth)acrylate-(meth)acrylic acid copolymer and styrene-maleic acid copolymer.
In particular, it is preferable to use a vinyl polymer containing a carboxy group as a water insoluble dispersant from the viewpoint of improving dispersion stability of a pigment. It is more preferable to use, as a water insoluble dispersant, a vinyl polymer containing at least, as a hydrophobic portion, an aromatic group-containing structural unit and containing, as a hydrophilic portion, a structural unit containing a carboxy group.

The weight average molecular weight of the polymer dispersant used in the invention is preferably from 3,000 to 200,000, more preferably from 5,000 to 100,000, further preferably from 5,000 to 80,000, and particularly preferably from 10,000 to 60,000.

In view of improving the stability of a pigment dispersion over time, the dispersant used in the invention is preferably a polymer dispersant, and is more preferably a
water-insoluble polymer dispersant. The mixing mass ratio of a pigment and a dispersant (pigment:dispersant) is preferably in a range of from 1:0.06 to 1:3, more preferably in a range of from 1:0.125 to 1:2, and further preferably in a range of from 1:0.125 to 1:1.5.

When a dye is used as the colorant in the invention, a material in which a water-insoluble carrier supporting a dye can be used as water-insoluble colored particles. As the dye, conventional dyes may be used without particular limitation. For example, dyes described in JP-A No. 2001-115066, JP-A No. 2001-335714 and JP-A No. 2002-249677 can preferably be used in the invention. The carrier used is not particularly limited so long as it is insoluble or sparingly soluble in water, and inorganic materials, organic materials and their composite materials can be used. Specifically, carriers described in, for example, JP-A No. 2001-181549 and JP-A No. 2007-169418 can preferably be used in the invention.
The carrier supporting a dye (water-insoluble colored particles) can be used as an aqueous dispersion using a dispersant. As the dispersant, any of the dispersants described hereinabove can be preferably used.

The water insoluble colored particle which can be used in the invention is preferably a water insoluble colored particle in which a colorant thereof is a pigment, is more preferably a water insoluble colored particle in which a colorant thereof is a self-dispersing pigment or a pigment whose surface has been covered with a water-insoluble polymer dispersant, and is particularly preferably a water insoluble colored particle in which a colorant thereof is a pigment whose surface has been covered with a water-insoluble polymer dispersant.
When a water insoluble colored particle having a pigment as a colorant thereof is,used, the water resistance, lightfastness, and weather resistance of an image to be formed by the ink composition can be increased. Further, when a water insoluble colored particle in which a colorant thereof is a pigment whose surface has been covered with a water-insoluble polymer dispersant is used, the discharging stability of the ink composition at the time of printing can be further improved.

The water-insoluble colored particles used in the invention have an average particle diameter of preferably from 10 to 200 nm, more preferably from 10 to 150 nm, and further preferably from 10 to 100 nm. When the average particle diameter is 200 nm or less, color reproducibility becomes better, and in the case of an inkjet method, droplet ejection properties become better. Furthermore, when the average particle diameter is 10 nm or more, light resistance becomes better.
Particle size distribution of the water-insoluble colored particles is not particularly limited, and may be any of wide particle size distribution and monodisperse particle size distribution. A mixture of two kinds or more of water-insoluble colored particles having monodisperse particle size distribution may be used.
The average particle diameter and the particle size distribution of the water-insoluble colored particles can be measured using, for example, a light scattering method.

In the invention, the water-insoluble colored particles (A) may be used singly or as mixtures of two or more kinds thereof.
From the standpoint of image density, the content of the water-insoluble colored particles is preferably from 1 mass% to 25 mass%, more preferably from 2 mass% to 20 mass%, further preferably from 2 mass% to 15 mass%, and particularly preferably from 2 mass% to 10 mass%, with respect to the total mass of the water-based ink composition.

The content of the water-dispersible particle is preferably from 1 mass% to 30 mass%, more preferably from 2 mass% to 20mass%, and particularly preferably from 2 mass% to 10mass%, with respect to the total mass of the ink composition from the standpoints of improving glossiness of an image formed thereof and the like.
The ratio between the content of the water-insoluble colored particles and the water-insoluble particles (water-insoluble colored particles/water-insoluble particles) in the water-based ink composition of the invention is preferably from 1/0.5 to 1/10, and more preferably from 1/1 to 1/4, from the standpoints of scratch fastness of an image formed of the ink composition and the like.

Water-soluble organic solvent The water-based ink composition of the invention contains water as a solvent, and can further contain a water-soluble organic solvent. The water-soluble organic solvent can be contained as a drying inhibitor or a permeation accelerator.
Where the water-based ink composition of the invention is particularly applied to an image recording method by an inkjet method, the drying inhibitor can effectively prevent clogging of nozzle that may possibly be generated by drying of an ink at an ink jet orifice.

The drying inhibitor is preferably a water-soluble organic solvent having vapor pressure less than that of water. Specific examples of the drying inhibitor include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol compounds, glycerin and trimethylolpropane; lower alkyl ethers of polyhydric alcohol, such as ethylene glycol monomethyl (or ethyl) ether, diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone and N-ethylmorpholine; sulfur-containing compounds such as sulfolane, dimethylsufoxide and 3-sulforene; polyfunctional compounds such as diacetone alcohol and diethanolamine; and urea compounds. Above all, polyhydric alcohols such as glycerin and diethylene glycol are preferred as the drying inhibitor. Those drying inhibitors may be used alone or as mixtures of two kinds or more thereof. Those drying inhibitors are preferably contained in an amount of from 10 to 50mass% in the ink.

The permeation accelerator is preferably used for the purpose of well permeating the ink into a recording medium (printing paper). Specific examples of the permeation accelerator include alcohols such as ethanol, isopropanol, butanol, di(tri)ethylene glycol monobutyl ether and 1,2-hexanediol; sodium lauryl sulafate, sodium oleate and nonionic surfactants. When the permeation accelerator is contained in the ink composition in an amount of from 5 mass% to 30 mass%, sufficient effect is exhibited. The permeation accelerator is preferably used within a range of the addition amount such that bleeding of printing and print-through are not generated.

The water-soluble organic solvent can be used to adjust viscosity, other than the above. Specific examples of the water-soluble organic solvent that can be used to adjust viscosity include alcohols (for example, methanol, ethanol, propanol, isopropanol, butanol, isobutanol, sec-butanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol compounds (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyl diethanolamine, N-ethyl diethanolamine, morpholine, N-ethylmorpholine, ethylene diamine, diethylene triamine, triethylene tetramine, polyethylene imine and tetramethylpropylene diamine), and other polar solvents (for example, formaldehyde, N,N-dimethylformamide, N,N-dimethylacetamide, diemthylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
The water-soluble organic solvent may be used alone or as mixtures of two kinds or more thereof.

Other additives Examples of other additives which can be used in the invention include conventional additives such as color fading inhibitor, emulsion stabilizer, permeation accelerator, ultraviolet absorber, preservative, mildew-proofing agent, pH regulator, surface tension regulator, defoamer, viscosity regulator, dispersant, dispersion stabilizer, anti-rust agent and chelating agent. Those various additives may directly be added after preparation of the water-based ink composition, or may be added at the time of preparation of the water-based ink composition.

The ultraviolet absorber is used for the purpose of improving preservability of an image. The ultraviolet absorber can use benzotriazole compounds described in, for example, JP-ANos. 58-185677, 61-190537, 2-782, 5-197075 and 9-34057; benzophenone compounds described in, for example, JP-A Nos. 46-2784 and 5-194483, and US Patent No. 3,214,463; cinnamic acid compounds described in, for example, JP-B Nos. 48-30492 and 56-21141, and JP-A No. 10-88106; triazine compounds described in, for example, JP-A Nos. 4-298503, 8-53427, 8-239368 and 10-182621, and JP-A No. 8-501291; compounds described in Research Disclosure No. 24239; and compounds that absorb ultraviolet light and emit fluorescence, i.e., fluorescent brighteners, represented by stilbene compounds or benzoxazole compounds.

The color fading inhibitor is used for the purpose of improving storability of an image. Examples of the color fading inhibitor that can be used include various organic color fading inhibitors and metal complex color fading inhibitors. Examples of the organic color fading inhibitor include hydroquinones, alkoxyphenols, dialkoxyphenols, phenols, anilines, amines, indanes, chromanes, alkoxyanilines and heterocycles. Examples of the metal complex color fading inhibitor include a nickel complex and a zinc complex. More specifically, compounds described in the patents cited in Research Disclosure No. 17643, chapter VII, items I to J; Research Disclosure No. 15162: Research Disclosure No. 18716, page 650, the left-hand column; Research Disclosure No. 36544, page 527; Research Disclosure No. 307105, page 872; and Research Disclosure No. 15162, and compounds included in the formulae of the representative compounds and the exemplified compounds described on pages 127 to 137 of JP-A No. 62-215272 can be used.

Examples of the mildew-proofmg agent include sodium dehydroacetate, sodium benzoate, sodium pyridinethion-1-oxide, p-hydroxybenzoic acid ethyl ester, 1,2-benzisothiazolin-3-one and its salt. Those are preferably used in the water-based ink composition in an amount of from 0.02 to 1.00mass%.
As the pH regulator, a neutralizer (organic base and inorganic alkali) may be used. The pH regulator may be added in an amount such that the water-based ink composition has pH of preferably from 6 to 10, and more preferably from 7 to 10, for the purpose of improving storage stability of the water-based ink composition.

Examples of the surface tension regulator include nonionic surfactants, cationic surfactants, anionic surfactants and betaine surfactants.
The surface tension regulator is added in an amount such that the surface tension of the water-based ink composition is adjusted to preferably from 20 to 60 mN/m, more preferably from 20 to 45 mN/m, and further preferably from 25 to 40 mN/m, in order to well eject the water-based ink composition by an inkjet method. On the other hand, when an ink is applied by a method other than an inkjet method, the surface tension is preferably in a range of from 20 to 60 mN/m, and more preferably in a range of from 30 to 50 mN/m.
The surface tension of the water-based ink composition can be measured using, for example, a plate method.

Specific examples of the surfactant as a hydrocarbon type preferably include anionic surfactants such as fatty acid salts, alkyl sulfate ester salts, alkyl benzene sulfonates, alkyl naphthalene sulfonates, dialkyl sulfosuccinates, alkyl phosphate ester salts, naphthalenesulfonic acid-formalin condensates and polyoxyethylene alkyl sulfate ester salts; and nonionic surfactants such as polyoxyethylene alkyl ether, polyoxyethylene alkyl allyl ether, polyoxyethylene fatty acid ester, sorbitan fatty acid ester, polyoxyethylene sorbitan fatty acid ester, polyoxyethylene alkyl amine, glycerin fatty acid ester and oxyethylene oxypropylene block copolymer. SURFYNOLS (trade name, products of Air Products & Chemicals) which are an acetylene type polyoxyethylene oxide surfactant are preferably used. Furthermore, amine oxide type amphoteric surfactants such as N,N-dimethyl-N-alkyl amine oxide are preferred.
Additionally, materials described on pages (37) to (38) of JP-A No. 59-157636 and Research Disclosure No. 308119 (1989) as surfactants can be used.
When fluorine (alkyl fluoride type) surfactants, silicone surfactants and the like, such as those described in JP-A Nos. 2003-322926, 2004-325707 and 2004-309806 are used, scratch fastness can be improved.
The surface tension regulator can be used as a defoamer, and fluorine compounds, silicone compounds, chelating agents represented by EDTA, and the like can be used.

When the ink is applied by an inkjet method, the water-based ink composition of the invention has a viscosity preferably in a range of from 1 to 30 mPa·s, more preferably in a range of from 1 to 20 mPa·s, further preferably in a range of from 2 to 15 mPa·s, and particularly preferably in a range of from 2 to 10 mPa·s, from the standpoints of droplet ejection stability and aggregation speed.
When the ink is applied by a method other than an inkjet method, the viscosity is preferably in a range of from 1 to 40 mPa·s, and more preferably in a range of from 5 to 20 mPa·s.
The viscosity of the water-based ink composition can be measured using, for example, a Brookfield viscometer.

Ink set
An ink set of the invention contains at least one kind of the water-based ink composition.
The ink set of the invention can be used for a recording method using the water-based ink composition, and is preferable as an ink set specifically used for an inkjet recording method. Moreover, the ink set of the invention is preferable, for example, in that it can be used in the form of an ink cartridge which houses the ink set integrally or independently and the handling thereof can be convenient. An ink cartridge containing an ink set is known in this technical field, and the ink set of the invention can be used as an ink cartridge suitably using known methods.

Image formation method An image formation method of the invention includes applying the water-based ink composition to a recording medium using the water-based ink composition or the ink set.
While the water-based ink composition and the ink set of the invention can be used for generally-used pens, pencils, recorders, pen plotters, or the like, the water-based ink composition and the ink set of the invention can be particularly preferably used for an inkjet recording method. The scope of the inkjet recording method for which the ink set or the ink cartridge of the invention can be used includes any recording methods including discharging an ink composition as droplets from a nozzle to adhere the droplets to a recording medium. Specific examples of the inkjet recording method for which the water-based ink composition of the invention can be used will be described below.

A first specific example is a method referred to as an electrostatic suction method. The electrostatic suction method is: a method including applying a strong electric field to a space between a nozzle and an accelerating electrodes located at forward of the nozzle, continuously spraying ink droplets from a nozzle, and giving a print information signal to deflecting electrodes while the ink droplets passing through the deflecting electrodes to thereby splash the ink droplets onto the recording medium and fix the ink onto the recording medium for recording an image; or a method including spraying ink droplets from a nozzle onto a recording medium according to a print information signal to thereby fix an image onto the recording medium for recording without deflecting the ink droplets. The ink set or the ink cartridge of the invention can be preferably used for the electrostatic suction method.

A second specific example is a method including applying pressure to an ink liquid with a small sized pump and mechanically vibrating an inkjet nozzle with a quartz resonator or the like to thereby compulsorily eject ink droplets from a nozzle. According to the method, the ink droplets ejected from the nozzle are electrically charged simultaneously with being ejected, and a print information signal is given to deflecting electrodes while the ink droplets passing through the deflecting electrodes to thereby splash the ink droplets to the recording medium for recording an image onto the recording medium. The ink set or the ink cartridge of the invention can be preferably used for this recording method.

A third specific example is a piezo method, which includes applying pressure and giving a print information signal to a liquid ink at once by a piezoelectric element, and ejecting ink droplets from a nozzle to a recording medium to thereby record an image onto the recording medium. The ink set or the ink cartridge of the invention can be preferably used for this recording method.

A fourth specific example is a bubble jet method, which includes heating an ink liquid using a microelectrode according to a print information signal to foam the ink liquid, and expanding the foam to thereby eject the ink liquid from a nozzle to a recording medium for recording an image onto the recording medium. The ink set or the ink cartridge of the invention can be preferably used for this recording method.

There is no particular limitation on a recording medium which can be used in the invention, and examples thereof include a regular paper, a fine paper, and a coated paper.

The ink set or the ink cartridge of the invention is particularly preferable as an ink composition used when an image is recorded onto a recording medium using image formation methods by the inkjet recording methods such as the above four methods. A recorded material which has been recorded using the ink set of the invention may have excellent image quality as well as excellent ozone resistance.

### EXAMPLES

The invention is explained hereinafter in detail by way of examples, while the scope of the invention is not limited thereto. The "part(s)" or "%" are mass-based units unless specifically defined otherwise.

Preparation of Self-dispersible polymer Example 1 360.0 g of methyl ethyl ketone was charged in a 2L three-necked flask equipped with a stirrer, a thermometer, a reflux condenser tube, and a nitrogen gas introduction pipe, and the temperature was increased to 75 °C. A mixed solution containing 180.0 g of phenoxy ethyl acrylate, 162.0 g of methyl methacrylate, 18.0 g of acrylic acid, 72 g of methyl ethyl ketone, and 1.44 g of a polymerization initiator (trade name: V-601, manufactured by Wako Pure Chemical Ind. Ltd.) was added dropwise with constant rate in such a manner that the addition was completed in 2 hours while maintaining the temperature inside the reaction vessel at 75°C for 2 hours. After the completion of the dropwise addition, a solution containing 0.72 g of V-601 (described above) and 36.0 g of methyl ethyl ketone was added. The mixture was stirred at 75°C, and then a solution containing 0.72 g of V-601 (described above) and 36.0 g of methyl ethyl ketone was further added. Then, the mixture was stirred at 75°C for 2 hours, the temperature was increased to 85°C, and the mixture was further stirred for further 2 hours. The weight average molecular weight (Mw) of the obtained copolymer was 64,000 (calculated with gel permeation chromatography (GPC) in terms of polystyrene, Used columns: TSKgel SuperHZM-H, TSKgel SuperHZ4000, and TSKgel SuperHZ200 (manufactured by TOSOH CORP.), and the acid value thereof was 38.9 (mgKOH/g).
Next, 668.3 g of the polymerization solution was weighed, 388.3 g of isopropanol and 145.7 ml of 1 mol/L NaOH aqueous solution were added thereto, and the temperature inside the reaction vessel was increased to 80°C. Further, 720.1 g of distilled water was added thereto dropwise at a rate of 20 ml/min so as to disperse the resultant in water.
Thereafter, the temperature inside the reaction vessel was maintained at 80°C for 2 hours, then maintained at 85°C for 2 hours, and further maintained at 90°C for 2 hours under an atmospheric pressure. Then, the solvent was distilled off. Thereafter, the pressure of the inside of the reaction vessel was reduced to distill off isopropanol, methyl ethyl ketone, and distilled water, the total amount of which 913.7 g, to obtain a water dispersant (emulsion) of a self-dispersible polymer (B-01) having a solid content of 28.0%. The number of each structural unit in the structural formula of the exemplified self-dispersible polymer (B-01) shown below indicates a mass ratio. Hereinafter, the same applies to each structural formula.

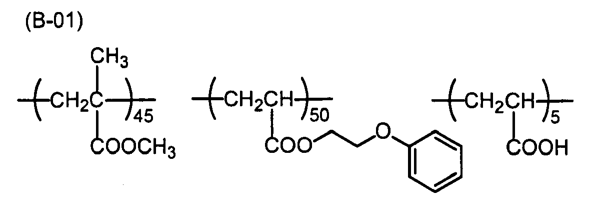

Example 2 The following exemplified self-dispersible polymers (B-02) to (B-21) were obtained in the same manner as in Example 1, except that the mixing ratio of each monomer of 180.0 g of phenoxy ethyl acrylate, 162.0 g of methyl methacrylate 1, and 18.0 g of acrylic acid in the synthesis of (B-01) used in Example 1 are respectively changed so as to achieve the mass ratios of the following structural formulae of the compounds. The physical properties of the obtained (B-02) to (B-21) are shown in Table 1. The amount of the NaOH aqueous solution (1 mol/L) was adjusted so that the degree of neutralization of each of the self-dispersible polymers was 75 mol% relative to 1 mol of dissociable group therein.

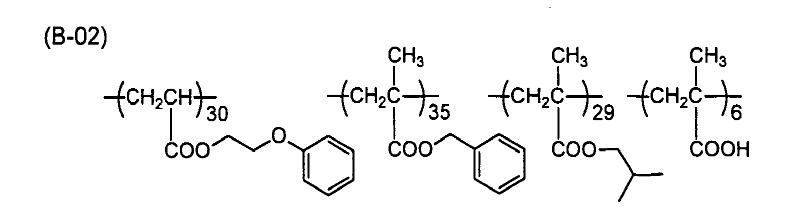

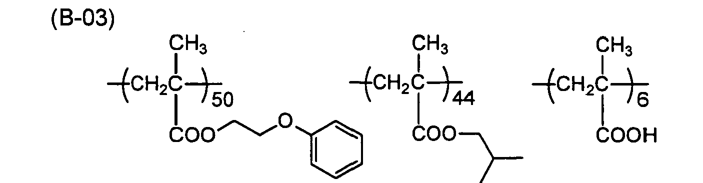

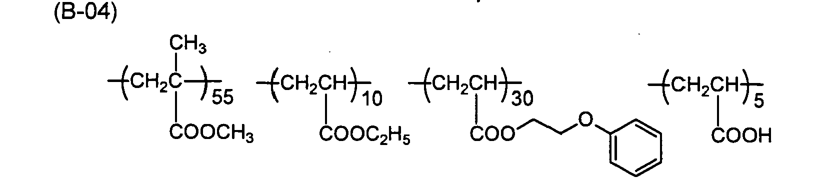

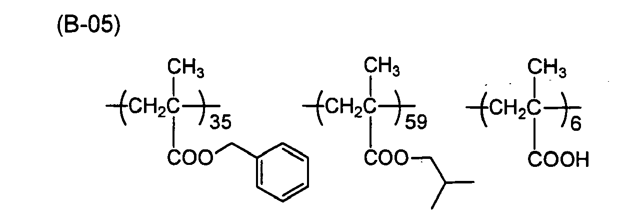

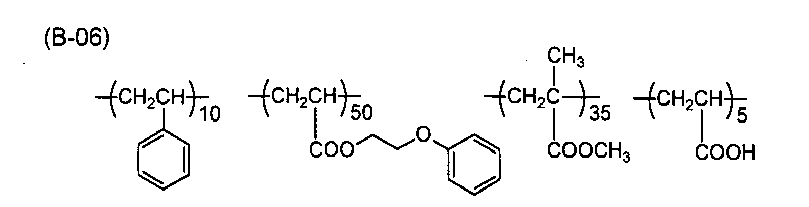

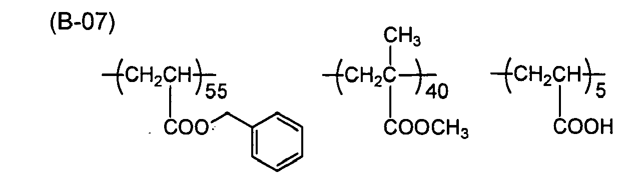

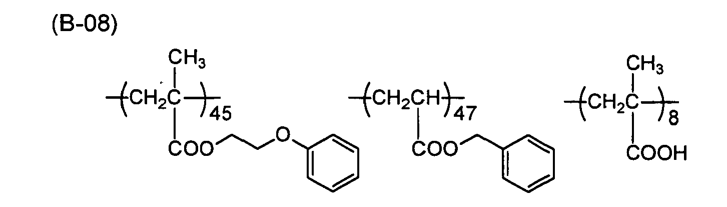

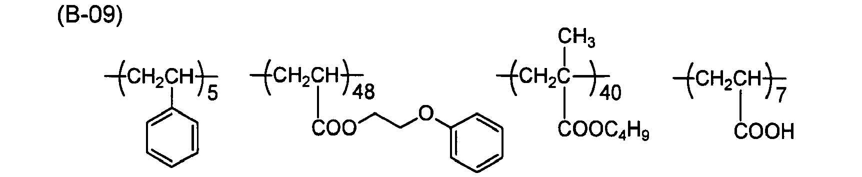

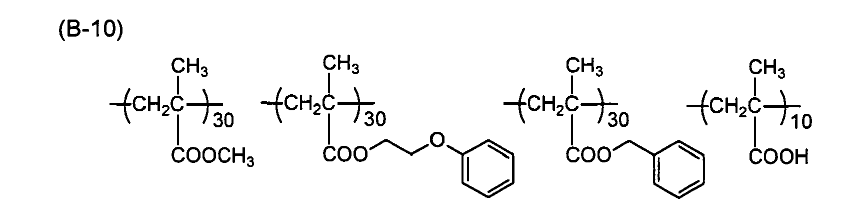

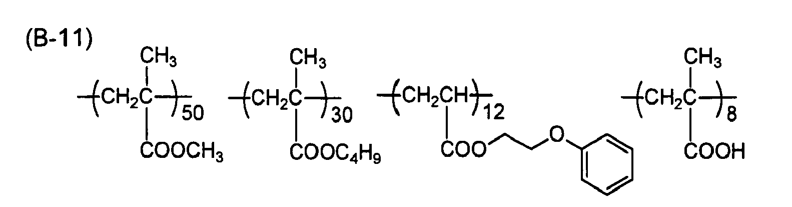

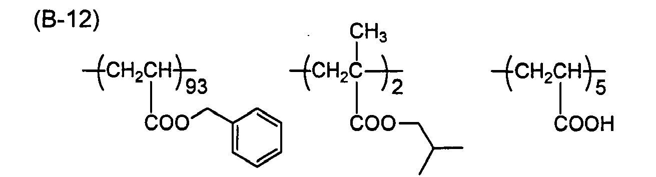

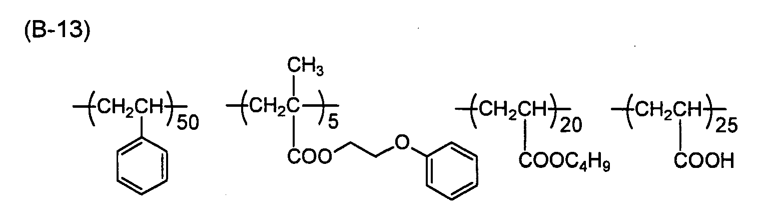

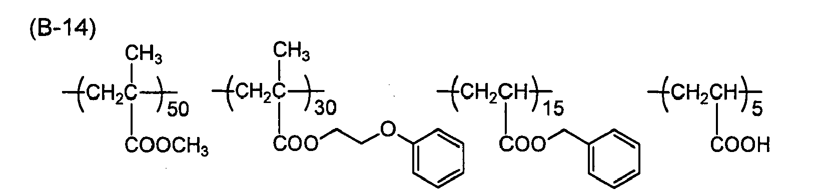

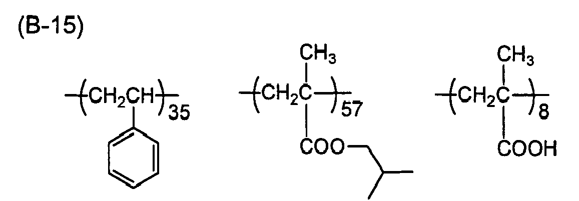

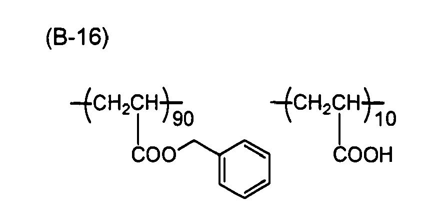

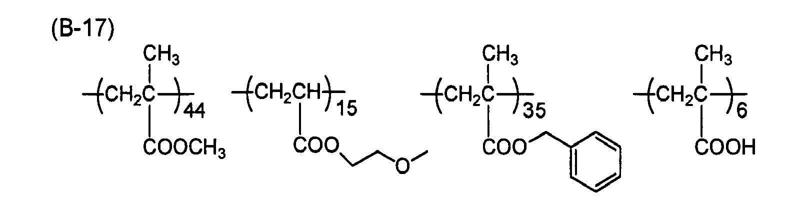

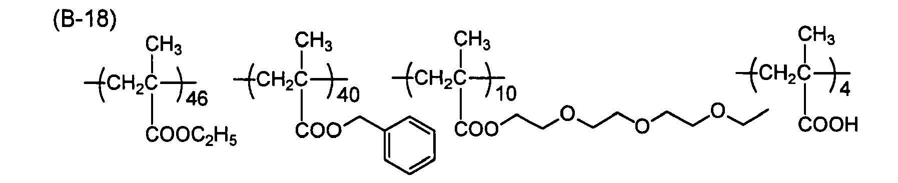

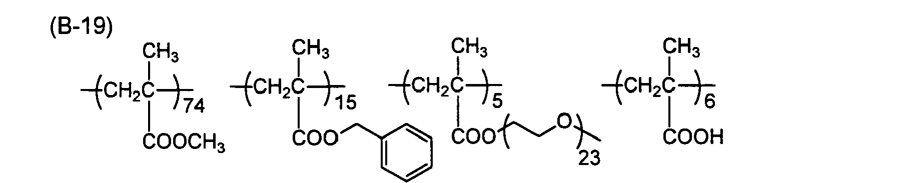

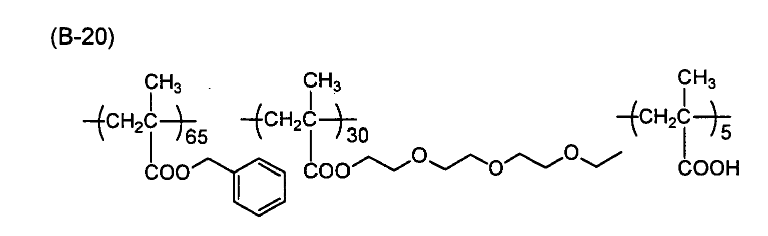

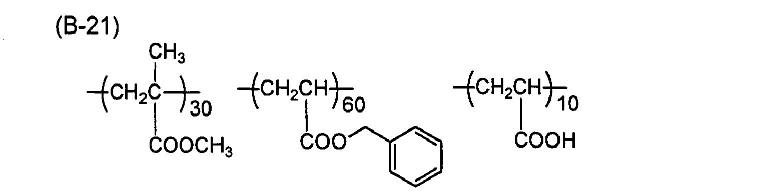

Example 3 8.1 g of PIONIN A-43-S (trade name, manufactured by Takemoto Yushi Co.) and 236.0 g of distilled water were put in a 1 L three-necked flask equipped with a stirrer and a reflux condenser tube, and heated to 70°C and stirred under a nitrogen air current. 6.2 g of styrene, 3.5 g of n-butyl acrylate, 0.3 g of acrylic acid, 1.0 g of ammonium persulfate, and 40 g of distilled water were added thereto and stirred for 30 minutes. Then, a monomer solution containing 117.8 g of styrene, 66.5 g of n-butyl acrylate, and 5.7 g of acrylic acid was added thereto dropwise with constant rate in such a manner that the addition was completed in 2 hours. After the completion of the dropwise addition, an aqueous solution containing 0.5 g of ammonium persulfate and 20 g of distilled water was added thereto, and then the resultant was stirred at 70°C for 4 hours. Thereafter, the temperature of the resultant was raised to 85°C, and the resultant was further stirred for 2 hours. The reaction mixture was cooled and filtered to provide the following exemplified self-dispersible polymer (B-22). The physical properties of the exemplified self-dispersible polymer (B-22) are shown in Table 1.

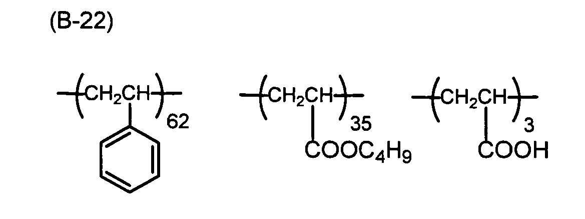

Comparative example 1 The following exemplified self-dispersible polymers (BH-01a) and (BH-02a) were obtained in the same manner as in Example 1, except that the mixing ratio of each monomer of 180.0 g of phenoxy ethyl acrylate, 162.0 g of methyl methacrylate 1, and 18.0 g of acrylic acid in the synthesis of (B-01) used in Example 1 are respectively changed so as to achieve the mass ratios of the following structural formulae of the compounds. The degree of neutralization of each of the self-dispersible polymers was 75 mol% relative to 1 mol of dissociable group therein.

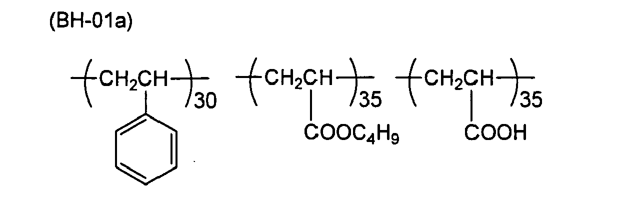

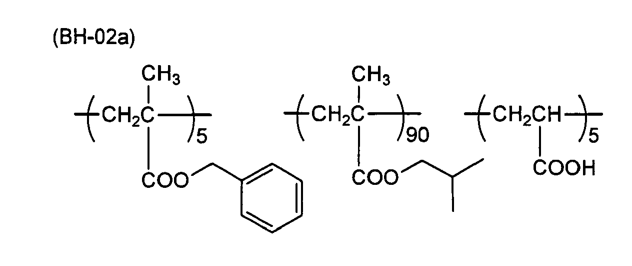

Comparative example 2 A polymer (mass ratio of copolymerization components: styrene/n-butyl acrylate/acrylic acid = 50/49/1) having an acid value of 7.8 was obtained by polymerization performed in the same manner as in Example 1, except that 180.0 g of styrene, 176.4 g of n-butyl acrylate, and 3.6 g of acrylic acid were used in place of 180.0 g of phenoxy ethyl acrylate, 162.0 g of methyl methacrylate, and 18.0 g of acrylic acid used in the synthesis of (B-01) of Example 1.
Next, 668.3 g of the polymerization solution was weighed, 388.3 g of isopropanol and 145.7 ml of 1 mol/L NaOH aqueous solution were added thereto, and then the temperature inside the reaction vessel was increased to 80°C. Then, 720.1 g of distilled water was added thereto dropwise at a rate of 20 ml/min, which resulted in a formation of precipitated coagulate. Since a large amount of coagulates was further precipitated after further maintaining the temperature inside the reaction vessel wased at 80°C for 2 hours under an atmospheric pressure, it was impossible to form a dispersion therefrom. Accordingly, no self-dispersible polymer was obtained.

Comparative example 3 A polymer (mass ratio of copolymerization components: styrene/ acrylic acid = 96/4) having an acid value of 31.1 was obtained by polymerization performed in the same manner as in Example 1, except that 345.6 g of styrene and 14.4 g of acrylic acid were used in place of 180.0 g of phenoxy ethyl acrylate, and 18.0 g of acrylic acid used in the synthesis of (B-01) of Example 1.
Next, 668.3 g of the polymerization solution was weighed, 388.3 g of isopropanol and 116.6 ml of 1 mol/L NaOH aqueous solution were added thereto, and then the temperature inside the reaction vessel was increased to 80°C. Then, 720.1 g of distilled water was added thereto dropwise at a rate of 20 ml/min, which resulted in a formation of precipitated coagulate. Since a large amount of coagulates was further precipitated after further maintaining the temperature inside the reaction vessel wased at 80°C for 2 hours under an atmospheric pressure, it was impossible to form a dispersion therefrom. Accordingly, no self-dispersible polymer was obtained.

Comparative example 4 According to an example of producing self-emulsified polymer particles described in paragraph [0041] of Japanese Patent Application Laid-Open No. 2006-283003, the following exemplified compound (BH-03a) was obtained. In the following exemplified compounds, AS-6S is a tradename of styrene macromer manufactured by Toagosei Co., Ltd. , and NK ESTER EH-4G is a tradename of polyethylene glycol methacrylate 2-ethylhexyl ether manufactured by Shin-nakamura Chmical Co., Ltd.. The physical properties of the obtained (BH-03a) are shown in Table 1.

Comparative example 5 According to an example of producing self-emulsified polymer particles described in paragraph [0098] of Japanese Patent Application Laid-Open (JP-A) No. 2002-88285, the following exemplified compound (BH-04a) was obtained. The physical properties of the obtained (BH-04a) are shown in Table 1.

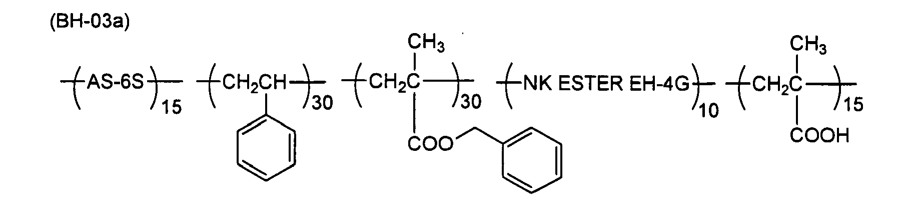

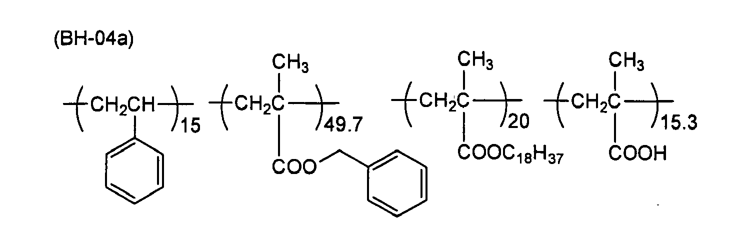

Comparative example 6 According to an example of producing self-emulsified polymer particles described in paragraph [0052] of Japanese Patent Application Laid-Open (JP-A) No. 2007-519772, the following exemplified compound (BH-05a) was obtained. The physical properties of the obtained (BH-05a) are shown in Table 1.

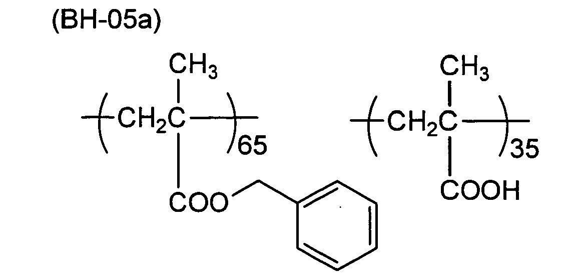

The amount of water soluble component(s) shown in Table 1 was measured as follows.
First, a polymer dispersion liquid was adjusted so that the solid content was 10%. 5 mL of the thus-prepared 10% polymer dispersion liquid was added to a centrifugal filter tube (trade name: AMICON ULTRA-15, manufactured by MILLIPORE; molecular cutoff (Mw) = 100,000), and centrifuged at an centrifugal acceleration rate of 4000 G at 10°C for 40 minutes with a compact high-speed refrigerated centrifuge (trade name: SRX-201, manufactured by Tomy Seiko Co. Ltd.). Then, an ultrafiltrated liquid was collected.
Next, the solid mass of the liquid collected by ultrafiltration was measured. The solid mass of the liquid was measured by measuring 500 mg to 600 mg of the ultrafiltrated liquid and put in an aluminum cup having a diameter of 1.5 cm, heating the liquid in a vacuum dryer at 120°C for 30 minutes under an atmospheric pressure, and leaving the resultant at 120°C for 2 hours under reduced pressure (degree of vacuum: 0.1 MPa or less). Thus, the solid mass of the resultant was measured.
The numerical value obtained by multiplying the value of the measured solid mass by ten times was defined as a content of the water soluble component of the self-dispersible polymer which is in a dispersion state.

### Evaluation criteria of Content of Water soluble component:

S: Water soluble component amount of less than 5 mass%.
A: Water soluble component amount of 5 mass% or more and less than 8 mass%.
B: Water soluble component amount of 8 mass% or more and less than 10 mass%.
X: Water soluble component amount of 10 mass% or more.

**Table 1**

| | Weight average molecular weight | Acid value (mgKO H/g) | Particle diameter (µm) | pH | Water- soluble component (%) | Content of hydrophilic structural unit (%) | Content of Stylene monomer structural unit (%) |
|---|---|---|---|---|---|---|---|
| B-01 | 64,000 | 39 | 30 | A | S | 5 | 0 |
| B-02 | 58,000 | 39 | 32 | A | S | 6 | 0 |
| B-03 | 65,000 | 39 | 40 | A | S | 6 | 0 |
| B-04 | 52,000 | 39 | 35 | A | S | 5 | 0 |
| B-05 | 44,000 | 39 | 45 | A | S | 6 | 0 |
| B-06 | 59,000 | 39 | 32 | A | S | 5 | 10 |
| B-07 | 68,000 | 39 | 31 | A | S | 5 | 0 |
| B-08 | 73,000 | 52 | 28 | A | S | 8 | 0 |
| B-09 | 69,000 | 54 | 34 | A | S | 7 | 5 |
| B-10 | 46,000 | 65 | 36 | A | S | 10 | 0 |
| B-11 | 66,000 | 52 | 28 | A | S | 8 | 0 |
| B-12 | 75,000 | 39 | 32 | A | S | 5 | 0 |
| B-13 | 72,000 | 195 | 33 | B | B | 25 | 50 |
| B-14 | 112,000 | 39 | 45 | A | S | 5 | 0 |
| B-15 | 50,000 | 52 | 70 | B | A | 8 | 35 |
| B-16 | 36,000 | 78 | 80 | B | A | 10 | 0 |
| B-17 | 30,000 | 39 | 15 | A | S | 21 | 0 |
| B-18 | 62,000 | 26 | 30 | A | S | 14 | 0 |
| B-19 | 82,000 | 39 | 25 | A | S | 11 | 0 |
| B-20 | 75,000 | 33 | 70 | A | A | 35 | 0 |
| B-21 | 32,000 | 78 | 40 | A | S | 10 | 0 |
| B-22* | 232,000 | 23 | 70 | A | S | 3 | 62 |
| BH-01a | 55,000 | 272 | 32 | B | X | 35 | 30 |
| BH-02a | 77,000 | 39 | 43 | A | X | 5 | 0 |
| BH-03a | 56,000 | 97 | 90 | B | X | 25 | 45 |
| BH-04a | 10,000 | 100 | 22 | X | X | 15.3 | 15 |
| BH-05a | 83,000 | 228 | 43 | B | X | 35 | 0 |

| | | | | | | | |
|---|---|---|---|---|---|---|---|
| *B-22 was obtained by emulsification polymerization. | | | | | | | |

In Table 1, the particle diameter is an average particle diameter and is a value measured with a common method using a "MICROTRUCK UPAEX-150"(trade name, manufactured by Nikkiso Co., Ltd.). The pH was evaluated under the following criteria.

### Evaluation criteria of pH:

A: 8 or more and less than 9
B: 9 or more and less than 10, or 6 or more and less than 8
X: 10 or more

### Example 4

### Preparation of Water-based Ink Composition

### Preparation of Cyan ink C-1

### Preparation of Cyan dispersion as Water-insoluble Colored particle (A)

A mixed solution of 6 parts by mass of styrene, 11 parts by mass of stearyl methacrylate, 4 parts by mass of a styrene macromer (trade name: AS-6, manufactured by Toagosei Co., Ltd.), 5 parts by mass of polypropylene glycol methacrylate (trade name: BLENMER PP-500, manufactured by NOF Corporation), 5 parts by mass of methacrylic acid, 0.05 part by mass of 2-mercaptoethanol and 24 parts by mass of methyl ethyl ketone was prepared in a reaction vessel.
On the other hand, a mixture solution of 14 parts by mass of styrene, 24 parts by mass of stearyl methacrylate, 9 parts by mass of a styrene macromer (trade name: AS-6, manufactured by Toagosei Co., Ltd.), 9 parts by mass of polypropylene glycol methacrylate (trade name: BLENMER PP-500, manufactured by NOF Corporation), 10 parts by mass of methacrylic acid, 0.13 part by mass of 2-mercaptoethanol, 56 parts by mass of methyl ethyl ketone, and 1.2 parts by mass of 2,2'-azobis(2,4-dimethylvaleronitrile) was prepared, and placed in a dropping funnel.

The mixed solution in the reaction vessel was heated to 75°C in nitrogen atmosphere while being stirred, and the mixed solution in the dropping funnel was gradually added dropwise to the reaction vessel over 1 hour. Two hours later from completion of the addition, a solution of 1.2 parts by mass of 2,2'-azobis(2,4-dimethylvaleronitrile) dissolved in 12 parts by mass of methyl ethyl ketone was added dropwise to the reaction vessel over 3 hours. The resulting solution was heated at 75°C for 2 hours and then at 80°C for 2 hours to obtain a solution of a water-insoluble polymer dispersant dissolved in methyl ethyl ketone.

With respect to a part of the polymer dispersant solution, a solid content was isolated by removing a solvent, and the solid obtained was diluted to 0.1mass% with tetrahydrofuran. A weight average molecular weight was measured by GPC (Gel Permeation Chromatography).
It was turned out that the solid thus isolated had a weight average molecular weight of 25,000 in terms of polystyrene conversion.

5.0 g in terms of solid content conversion of the polymer dispersant solution thus obtained, 10.0 g of cyan pigment blue 15:3 (manufactured by Dainichiseika Color & Chemicals Mfg. Co., Ltd.), 40.0 g of methyl ethyl ketone, 8.0 g of 1 mol/liter sodium hydroxide, 82.0 g of ion-exchanged water and 300 g of 0.1 mm zirconia beads were supplied to a vessel, and dispersed with a ready-mill disperser (manufactured by AIMEX Co., Ltd.) at 1,000 rpm for 6 hours. The dispersion thus obtained was vacuum concentrated with an evaporator until methyl ethyl ketone can sufficiently be distilled away, and concentrated until a pigment concentration is 10%, thereby preparing a cyan dispersion C1 as a dispersion of water-insoluble colored particles (A) formed of a pigment having a surface covered with a water-insoluble polymer dispersant. The cyan dispersion C1 thus obtained had an average particle diameter of 77 nm.

An ink was prepared so as to have the following formulation using the cyan dispersion C1 as the dispersion of the water-insoluble colored particles (A) and B-01 as the dispersion of the self-dispersible polymer (B). After the preparation, coarse particles were removed with a 5 µm filter to prepare ink C-1 as a water-based ink composition.

### Formulation of Cyan ink C-1

- Cyan pigment (pigment blue 15:3), manufactured by Dainichiseika Color & Chemicals Mfg. Co., Ltd. 4 mass%
- Polymer dispersant 2 mass%
- B-01 (solid content conversion) 8 mass%
- Diethylene glycol (manufactured by Wako Pure Chemical Industries, Ltd.
   10 mass%
- Glycerin 20 mass%
- Ethylene oxide (10 moles) adduct of acetylene diol (trade name: OLFINE E1010, Nissin Chemical Industry Co., Ltd.) 1 mass%
- Ion-exchange water To make 100 mass% in total

In the above, the measurement of the average particle diameter was performed by suitably diluting the concentration of the dispersion liquid to a concentration suitable for the measurement with the Microtruck UPA EX-150 (described above) under the same measurement conditions. More specifically, the volume average particle diameter was measured under the conditions of: particle transmission being transmittable; particle refractive index being 1.51; particle shape being non spherical; density being1.2 g/cm³; solvent being water; and cell temperature being from 18 to 25°C. Moreover, the viscosity was measured with a DV-II + VISCOMETER (trade name, manufactured by BROOKFIELD). Moreover, the surface tension was measured with a platinum plate method using a CBVP-Z (trade name, manufactured by Kyowa Interface Science Co., LTD.).

### Preparation of Cyan inks C-2 to C-22 and C-H1 to C-H6

Cyan inks C-2 to C-21 and C-H1 to C-H6, which respectively contain an water-based ink composition, were prepared in the same manner as in the cyan ink C-1, except that each one of the self-dispersible polymers (B) shown in Table 2 was used in place of the
self-dispersible polymer B-01 in the cyan ink C-1.
The physical property values of the cyan inks measured immediately after the formation are shown in Table 2.

**Table 2**

| Cyan ink | Polymer (B) | pH | Surface tension (mN/m) | Viscosity | Particle diameter (nm) | Remarks |
|---|---|---|---|---|---|---|
| C-1 | B-11 | 9.0 | 33.9 | A | 90 | The invention |
| C-2 | B-02 | 9.0 | 34.7 | A | 91 | The invention |
| C-3 | B-03 | 9.0 | 35.6 | A | 88 | The invention |
| C-4 | B-04 | 9.1 | 34.8 | A | 91 | The invention |
| C-5 | B-05 | 9.1 | 34.3 | A | 90 | The invention |
| C-6 | B-06 | 9.0 | 33.8 | A | 89 | The invention |
| C-7 | B-07 | 9.2 | 33.7 | A | 92 | The invention |
| C-8 | B-08 | 8.9 | 34.1 | A | 94 | The invention |
| C-9 | B-09 | 8.9 | 34.3 | A | 92 | The invention |
| C-10 | B-10 | 9.0 | 33.6 | A | 88 | The invention |
| C-11 | B-11 | 9.0 | 33.8 | A | 90 | The invention |
| C-12 | B-12 | 9.4 | 33.9 | A | 91 | The invention |
| C-13 | B-13 | 9.0 | 33.7 | A | 90 | The invention |
| C-14 | B-14 | 8.8 | 33.9 | A | 90 | The invention |
| C-15 | B-15 | 9.5 | 34.1 | A | 92 | The invention |
| C-16 | B-16 | 9.4 | 33.6 | A | 95 | The invention |
| C-17 | B-17 | 9.0 | 33.6 | A | 98 | The invention |
| C-18 | B-18 | 8.9 | 34.1 | A | 96 | The invention |
| C-19 | B-19 | 8.8 | 33.9 | A | 90 | The invention |
| C-20 | B-20 | 9.0 | 33.6 | A | 94 | The invention |
| C-21 | B-21 | 8.9 | 33.8 | A | 95 | The invention |
| C-22 | B-22 | 9.4 | 33.9 | B | 98 | The invention |
| C-H1 | BH-01a | 9.4 | 33.3 | X | 98 | Comparative example |
| C-H2 | BH-02a | 8.9 | 34.5 | B | 98 | Comparative example |
| C-H3 | BH-03a | 10.1 | 34.5 | X | 101 | Comparative example |
| C-H4 | BH-04a | 11.2 | 34.3 | X | 102 | Comparative example |
| C-H5 | BH-05a | 9.4 | 33.5 | X | 101 | Comparative example |
| C-H6 | None | 9.2 | 31.0 | A | 88 | Comparative example |

In Table 2, the viscosity was evaluated according to the following evaluation criteria.

### Evaluation criteria of Viscosity:

A: Less than 6.5 mPa·s
B: 6.5 mPa·s or more and less than 10 mPa·s
X: 10 mPa·s or more

Stability over time of Ink, Droplet ejection stability and Fixation property of Image
The stability over time of the ink, the droplet ejection stability of the ink and the fixation property of images formed of the ink were conducted on each ink prepared above. The stability over time test of an ink is to evaluate stability of particle diameter and viscosity of an ink before ejecting the ink, that is, the stability of particle diameter and viscosity of the ink that is stored in an ink storage tank (or cartridge). When the stability is poor, droplet ejection nozzle can be clogged when discharging an ink from an ejection nozzle of an inkjet apparatus. The droplet ejection stability of an ink is intended to evaluate the ejection directing property. When the viscosity of an ink is high, the ejection directing property can be poor due to occurrence of clogging of ejection nozzles.

### Test (I) of Stability over time of Ink

10 mL of each of the inks was sealed in each 15 mL glass bottle. Then, the (1) average particle diameter and viscosity after leaving at 60°C for 14 days and (2) average particle diameter and viscosity after leaving at 40°C for 3 months were measured for each ink. The changes in the average particle diameter before and after the leaving [(the average particle diameter after leaving - the average particle diameter before leaving) / (the average particle diameter before leaving)] and the changes in the viscosity before and after leaving [(the viscosity after leaving - the viscosity before leaving) / the viscosity before leaving] were respectively calculated. The evaluation criteria are as follows.

### Evaluation criteria of Stability over time:

A: The change in the average particle diameter or the change in the viscosity was less than 5%.
B: The change in the average particle diameter or the change in the viscosity was 5% or more and less than 10%.
X: The change in the average particle diameter or the change in the viscosity was 10% or more.
X indicates that the ink was evaluated to be unusable. The results are shown in Table 3.

### Test (I) of Droplet ejection stability of Ink

The droplet ejection stability test was performed as follows. Ink was added dropwise onto a TOKUHISHI ART DOUBLE-FACED N (trade name, manufactured by Mitsubishi Paper Mills Ltd.) using a GELJETG717 printer head (tradename, manufactured by Ricoh Co., Ltd.) in such a manner that the resolution was 1,200 × 600 dpi and the ink droplet amount was 12 pL. The droplet ejection stability was evaluated by observing a droplet ejection state after 5 hours-successive running of the droplet ejection. The results of the droplet ejection stability test were shown in Table 3.
The evaluation criteria of the droplet ejection stability test of Table 3 are as follows.

### Evaluation criteria of Droplet ejection stability:

A...Poor discharge or poor direction was NOT observed.
AB...Poor discharge was NOT observed, while Slight poor-direction was observed.
B...Almost no poor discharge was observed, while Slight poor-direction was observed.
X...Poor discharge was Frequently observed.

### Test of Fixation property of Image formed of Ink

The cartridge of GELJETG717 (described above) was refilled with the ink, and a solid image was printed on the TOKUHISHI ART DOUBLE-FACED N (described above) using the GELJETG717(described above), and the resulted print sample was dried at room temperature for 24 hours or more. After drying, the print sample was allowed to stand and heated at 80°C for 1 hour in a heating oven (trade name: PDR-3KP, manufactured by ESPEC), and was evaluated for fixation property after leaving for 12 hours. The results are shown in Table 3. In the fixation property test, a SCOTCH TAPE (trade name, manufactured by Nichiban Co., Ltd.) and a MENDING TAPE (trade name, manufactured by 3M) were stuck to each sample in such a manner that the tape surfaces were entirely stuck to each sample.
Then, a transfer of color to the removed tape was evaluated according to the following evaluation criteria.

### Evaluation criteria of Fixation property:

A: No transfer of color was observed in the scotch tape and the mending tape.
B: Slight transfer of color was observed in at least one of the scotch tape and the mending tape.
X: Transfer of color was observed in both the scotch tape and the mending tape.

**Table 3**

| Cyan ink | Polymer (B) | Stability over time | | | | Droplet ejection stability | Fixation property | Remarks |
|---|---|---|---|---|---|---|---|---|
| | | Viscosity | | Particle diameter | | | | |
| | | (1) | (2) | (1) | (2) | | | |
| C-1 | B-01 | A | A | A | A | A | A | Invention |
| C-2 | B-02 | A | A | A | A | A | A | Invention |
| C-3 | B-03 | A | A | A | A | A | A | Invention |
| C-4 | B-04 | A | A | A | A | A | A | Invention |
| C-5 | B-05 | A | A | A | A | A | A | Invention |
| C-6 | B-06 | A | A | A | A | A | A | Invention |
| C-7 | B-07 | A | A | A | A | A | A | Invention |
| C-8 | B-08 | A | A | A | A | A | A | Invention |
| C-9 | B-09 | A | A | A | A | A | A | Invention |
| C-10 | B-10 | A | A | A | A | A | A | Invention |
| C-11 | B-11 | A | A | A | A | A | A | Invention |
| C-12 | B-12 | A | A | A | A | A | A | Invention |
| C-13 | B-13 | A | B | A | A | B | A | Invention |
| C-14 | B-14 | A | A | A | A | A | A | Invention |
| C-15 | B-15 | A | B | A | B | AB | A | Invention |
| C-16 | B-16 | A | B | A | B | AB | A | Invention |
| C-17 | B-17 | A | A | A | A | A | A | Invention |
| C-18 | B-18 | A | A | A | A | A | A | Invention |
| C-19 | B-19 | A | A | A | A | A | A | Invention |
| C-20 | B-20 | A | B | A | B | B | A | Invention |
| C-21 | B-21 | A | A | A | A | A | A | Invention |
| C-22 | B-22 | A | B | A | B | B | A | Invention |
| C-H1 | BH-01a | B | X | B | X | X | A | Comparative Example |
| C-H2 | BH-02a | B | B | B | B | B | A | Comparative Example |
| C-H3 | BH-03a | B | X | B | X | X | A | Comparative Example |
| C-H4 | BH-04a | B | X | B | X | X | A | Comparative Example |
| C-H5 | BH-05a | X | X | B | B | X | A | Comparative Example |
| C-H6 | None | A | A | A | A | A | X | Comparative Example |

As shown in Table 1, each self-dispersible polymer of the invention had a low acid value and a low degree of neutralization, and thus the content of water soluble component(s) therein was small. Moreover, it is revealed that the suspension/dispersion state of the self-dispersible polymer of the invention is stable. In contrast, while the comparative compound BH-01a has a low the degree of neutralization, the acid value was as high as 272. Thus, the comparative compound BH-01a is almost hydrophilic on the whole and the content of water soluble component(s) therein is relatively large. With respect to the comparative compound BH-03a, the acid value was relatively low, but the content of hydrophilic structural unit was high and the degree of neutralization was as high as 160%, and thus the content of water soluble component(s) therein is relatively large. With respect to the comparative compound BH-04a, the acid value was relatively low, but the degree of neutralization was as high as 250% and the content of water soluble component(s) therein is extremely large.
When the acid value of the self-dispersible polymer was extremely reduced as in Comparative example 2, emulsification of the polymer became difficult. Moreover, when the aromatic group-containing structural unit exceeded 95 mass% as in Comparative example 3, emulsification of the polymer also became difficult.

As shown in Table 3, the ink of the invention is excellent in stability over time. In contrast, C-H3 and C-H4, which are inks each having high pH, tended to increase its viscosity and the particle diameter according to time lapse.
Each ink of the invention had low ink viscosity so as to be free from suffering due to poor discharge, and was excellent in the droplet ejection stability. In contrast, the droplet ejection stability of each of ink compositions C-H3 and C-H4, each of which contains a large amount of water soluble component(s) in its self-dispersible polymer dispersion, was extremely low.
Further, the ink composition C-H2, which contained the self-dispersible polymer B-H02a, in which the aromatic group-containing structural unit was less than 10 mass%, has insufficient ink stability over time.
Moreover, while the inks of the invention containing a polymer component as an ink composition and the comparative inks C-H1 to C-H5 were excellent in fixation property, the fixation property of ink C-H6 containing no polymer was very poor.

In order to further verify a higher dispersion stability of the self-dispersible polymer dispersion liquid of the invention, the samples were subjected to a test including an acceleration process for evaluating the stability over time and a test including higher temperature condition were performed as follows. The results are shown in Table 4.

Test of Stability over time of of Polymer dispersion (including Acceleration of particle precipitation)
Each of the polymer dispersion liquid was adjusted to have a solid content of 25%. The thus-prepared 25% polymer dispersion liquid was charged in a centrifugation tube, and was centrifuged at the number of rotations of 12,000 rpm at 10°C for 60 minutes with a high-speed large capacity refrigerated centrifuge (manufactured by Kubota Corporation), and then a supernatant liquid in the centrifuged sample was collected.
Next, the solid mass of the supernatant liquid collected by centrifugal separation was measured. The measurement was performed by measuring 500 mg to 600 mg of the supernatant liquid collected by centrifugal separation and put it in an aluminum cup having a diameter of 1.5 cm, heating the supernatant liquid at 120°C for 30 minutes under the atmospheric pressure in a vacuum dryer, and leaving the resultant under reduced pressure (degree of vacuum: 0.1 MPa or less) at 120°C for 2 hours. Then, the mass of a solid content of the resultant was measured. A ratio was calculated by dividing the value of the solid content of the resultant after centrifugation by the value of the solid content of the dispersion liquid before centrifugation.

### Evaluation criteria of Stability over time (including Acceleration)

S: The ratio is 0.95 or more.
A: The ratio is 0.9 or more and less than 0.95.
B: The ratio is 0.8 or more and less than 0.9.
X: The ratio is less than 0.8.

Test of Stability over time of Polymer dispersion (with higher temperature condition)
10 mL of each of the polymer dispersion liquid was sealed in each 15 mL glass bottle. Then, (1) the average particle diameter, the viscosity and the pH after leaving at 60°C for 14 days, (2) the average particle diameter, the viscosity and the pH after leaving at 40°C for 3 months, and (3) the average particle diameter, the viscosity and the pH after leaving at 70°C for 2 months were measured for each polymer dispersion liquid. The changes in the average particle diameter before and after the leaving [(the average particle diameter after leaving - the average particle diameter before leaving) / (the average particle diameter before leaving)], the changes in the viscosity before and after leaving [(the viscosity after leaving - the viscosity before leaving) / the viscosity before leaving], and the changes in the pH before and after leaving [(the pH after leaving - the pH before leaving) / the pH before leaving] of each polymer dispersion liquid were respectively calculated. The evaluation criteria are as follows.

### Evaluation criteria of Stability over time of Polymer dispersion (with higher temperature condition):

A: The change in the average particle diameter or the change in the viscosity was less than 5%, or the change in the pH was less than 2%.
B: The change in the average particle diameter or the change in the viscosity was 5% or more and less than 10%, or the change in the pH was 2% or more and less than 5%.
X: The change in the average particle diameter or the change in the viscosity was 10% or more, or the change in the pH was 5% or more.
X indicates that the ink was evaluated to be unusable. The results are shown in Table 4.

**Table 4**

| | Dispersion stability (+ acceleration) | Test of stability over time of polymer dispersion liquid | | | | | | | | |
|---|---|---|---|---|---|---|---|---|---|---|
| | | Viscosity | | | Particle diameter | | | pH | | |
| | | (1) | (2) | (3) | (1) | (2) | (3) | (1) | (2) | (3) |
| B-01 | S | A | A | A | A | A | A | A | A | A |
| B-02 | S | A | A | B | A | A | B | A | A | B |
| B-03 | S | A | A | B | A | A | B | A | A | B |
| B-04 | S | A | A | A | A | A | A | A | A | A |
| B-05 | S | A | A | B | A | A | B | A | A | B |
| B-06 | A | A | B | B | A | B | B | A | B | B |
| B-07 | S | A | A | A | A | A | A | A | A | A |
| B-08 | B | A | B | B | A | B | B | B | B | B |
| B-09 | B | A | B | B | A | A | B | A | B | B |
| B-10 | A | A | B | B | A | A | B | A | B | B |
| B-11 | B | A | A | B | A | A | B | A | A | B |
| B-12 | A | A | B | B | A | A | B | A | A | B |
| B-13 | B | B | B | B | B | B | B | B | B | B |
| B-14 | S | A | A | A | A | A | A | A | A | A |
| B-15 | B | B | B | B | A | B | B | A | B | B |
| B-16 | B | A | B | B | A | B | B | A | B | B |
| B-17 | S | A | A | A | B | A | A | A | A | A |
| B-18 | S | A | A | A | A | A | A | A | A | A |
| B-19 | S | A | A | A | A | A | A | A | A | A |
| B-20 | A | A | B | B | A | B | B | A | B | B |
| B-21 | S | A | A | A | A | A | A | A | A | A |
| B-22 | X | B | X | X | B | B | X | B | X | X |
| BH-01a | X | B | B | X | B | B | X | B | X | X |
| BH-02a | X | X | X | X | B | B | X | B | B | X |
| BH-03a | B | B | B | X | B | B | B | B | B | X |
| BH-04a | X | X | X | X | B | B | X | B | B | X |
| BH-05a | B | X | X | X | X | X | X | B | X | X |

Further, in order to verify a higher stability over time and droplet ejection stability of the water-based ink composition of the invention, each samples was evaluated as follows.
The results are shown in Table 5.

Test (II) of Stability over time of Ink
10 mL of each of the ink was sealed in each 15 mL glass bottle. Then, the average particle diameter and the viscosity at 70°C for 2 months were measured for each ink. The changes in the average particle diameter before and after the leaving [(the average particle diameter after leaving - the average particle diameter before leaving) / (the average particle diameter before leaving)] and the changes in the viscosity before and after leaving [(the viscosity after leaving - the viscosity before leaving) / the viscosity before leaving] of each ink were respectively calculated. The evaluation criteria are as follows.

### Evaluation criteria of Stability over time (with higher temperature condition):

A: The change in the average particle diameter or the change in the viscosity was less than 5%.
B: The change in the average particle diameter or the change in the viscosity was 5% or more and less than 10%.
X: The change in the average particle diameter or the change in the viscosity was 10% or more.
X indicates that the ink was evaluated to be unusable. The results are shown in Table 5.

### Test (III) of Stability over time of Ink

10 mL of each of the ink was sealed in each 15 mL glass bottle. Then, (1) the pH after leaving at 60°C for 14 days, (2) the pH after leaving at 40°C for 3 months, and (3) the pH after leaving at 70°C for 2 months were measured for each ink. The changes in the pH before and after leaving [(the pH after leaving - the pH before leaving) / the pH before leaving] of each ink were respectively calculated. The evaluation criteria are as follows.

### Evaluation criteria of Stability over time (with higher temperature condition):

A: The change in the pH was less than 2%.
B: The change in the pH was 2% or more and less than 5%.
X: The change in the pH was 5% or more.
X indicates that the ink was evaluated to be unusable. The results are shown in Table 5.

Test (II) of Droplet ejection stability of Ink The droplet ejection stability was evaluated in the same manner as in the above-described droplet ejection stability, except that the droplet ejection stability was evaluated by observing a droplet ejection state after 10 hours-successive running of the droplet ejection. The results of the droplet ejection stability test were shown in Table 5.

### The evaluation criteria are the same as those of the above-described droplet ejection stability.

**Table 5**

| Cyan ink | Polymer (B) | Stability over time | | | | | Droplet ejection stability | | Remarks |
|---|---|---|---|---|---|---|---|---|---|
| | | Viscosity | Particle diameter | pH | | | 10 hours later | 24 hours later | |
| | | | | (1) | (2) | (3) | | | |
| C-1 | B-01 | A | A | A | A | A | A | A | The invention |
| C-2 | B-02 | B | A | A | A | B | AB | AB | The invention |
| C-3 | B-03 | B | B | A | A | B | AB | AB | The invention |
| C-4 | B-04 | A | A | A | A | A | A | A | The invention |
| C-5 | B-05 | B | B | A | A | B | AB | AB | The invention |
| C-6 | B-06 | B | B | A | B | B | AB | B | The invention |
| C-7 | B-07 | A | A | A | A | A | A | A | The invention |
| C-8 | B-08 | B | B | B | B | B | AB | B | The invention |
| C-9 | B-09 | B | B | A | B | B | AB | AB | The invention |
| C-10 | B-10 | A | A | A | B | B | A | A | The invention |
| C-11 | B-11 | B | A | A | A | B | A | AB | The invention |
| C-12 | B-12 | B | B | A | A | B | B | B | The invention |
| C-13 | B-13 | B | B | B | B | B | B | B | The invention |
| C-14 | B-14 | A | A | A | A | A | A | A | The invention |
| C-15 | B-15 | B | B | A | B | B | B | B | The invention |
| C-16 | B-16 | B | B | A | A | B | B | B | The invention |
| C-17 | B-17 | A | A | A | A | A | A | A | The invention |
| C-18 | B-18 | A | A | A | A | A | A | A | The invention |
| C-19 | B-19 | A | A | A | A | A | A | A | The invention |
| C-20 | B-20 | B | B | A | B | B | B | B | The invention |
| C-21 | B-21 | B | B | A | A | A | A | A | The invention |
| C-22 | B-22 | X | X | B | X | X | X | X | The invention |
| C-H1 | BH-01a | X | X | B | B | X | X | X | CE* |
| C-H2 | BH-02a | X | X | B | B | X | X | X | CE* |
| C-H3 | BH-03 | X | X | B | B | X | X | X | CE* |
| C-H4 | BH-04 | X | X | B | B | X | X | X | CE* |
| C-H5 | BH-05 | X | X | B | B | X | X | X | CE* |
| C-H6 | B-01 | B | B | A | A | B | A | B | CE* |

| | | | | | | | | | |
|---|---|---|---|---|---|---|---|---|---|
| CE*: Comparative example | | | | | | | | | |

It was understood from Table 4 that the self-dispersible polymer particle dispersion liquid of the invention formed by the solution polymerization method has unexpectedly remarkable dispersion stability in the centrifugal separation with acceleration and a higher stability over time.
It was further understood from Table 5 that the the water-based ink composition containing the self-dispersible polymer particles of the invention formed by the solution polymerization method has unexpectedly remarkable ink stability over time and droplet ejection stability.
As described above, it is understood that the use of the ink containing the self-dispersible polymer of the invention can provide an ink composition having stable dischargeability and excellent fixation property which have not been achieved.

## Claims

1. A self-dispersible polymer comprising,
- one or more hydrophilic structural units, and
- one or more aromatic group-containing structural units in an amount of 10-95 wt.-%, based on the total mass of the self-dispersible polymer;
and having a content of water soluble components, being soluble in water when the self-dispersible polymer is dispersed in a water-based medium, of 10 wt.- or less, based on the total mass of the self-dispersible polymer.

2. The self-dispersible polymer of claim 1, wherein at least one of the one or more hydrophilic structural units is a structural unit which has a carboxyl group.

3. The self-dispersible polymer of claim 1 or 2, having an acid value of 20-200.

4. The self-dispersible polymer of any of claims 1-3, wherein the total content of the one or more hydrophilic structural units is 25 wt.-% or more, based on the total mass of the self-dispersible polymer.

5. The self-dispersible polymer of any of claims 1-4, wherein the one or more aromatic group-containing structural units include an aromatic group-containing (meth)acrylate structural unit.

6. The self-dispersible polymer of any of claims 1-5, further comprising an alkyl (meth)acrylate structural unit having a straight or branched C₁₋₈-alkyl group.

7. The self-dispersible polymer of any of claims 1-6, further comprising a styrene monomer structural unit in an amount of 30 wt.-% or less, based on the total mass of the self-dispersible polymer.

8. A water-based dispersion comprising the self-dispersible polymer of any of claims 1-7 present in a solid state and dispersed in a water-based medium.

9. A water-based ink composition comprising a water-based medium, a water-insoluble colored particle comprising a colorant, and a polymer particle comprising the self-dispersible polymer of any one of claims 1-7.

10. The water-based ink composition of claim 9, wherein the colorant is a pigment.

11. An ink for ink jet recording comprising the water-based ink composition of claim 9.

12. An ink set comprising the water-based ink composition of claim 9.

13. An image forming method comprising applying the water-based ink composition of claim 9 to a recording medium, wherein the water-based ink composition may be a component of an ink set which further comprises another ink composition.
